# EUROPÄISCHE PATENTSCHRIFT

(11) **EP 1 984 480 B1**
(45) Veröffentlichungstag und Bekanntmachung des Hinweises auf die Patenterteilung: **15.07.2015**
(21) Anmeldenummer: 07704319.8
(22) Anmeldetag: 01.02.2007
(51) Int. Cl.: C11B 1/06, A01N 43/653, A01N 43/40, A01N 37/50, A01P 3/00, C11C 3/00, C10L 1/19, C10L 1/222, C10L 1/224, C10L 1/23, C10L 1/232, C10L 1/233, C10L 1/24, C10L 1/28, C10L 10/00, C10L 10/12

(54) **VERWENDUNG VON FUNGIZIDEN ZUR ERHÖHUNG DER QUALITÄT UND GEGEBENENFALLS DER QUANTITÄT VON ÖLPFLANZENERZEUGNISSEN**
USE OF FUNGICIDES FOR INCREASING THE QUALITY AND OPTIONALLY THE QUANTITY OF OIL-PLANT PRODUCTS
UTILISATION DE FONGICIDES POUR AUGMENTER LA QUALITE ET EVENTUELLEMENT LA QUANTITE DE PRODUITS OLEAGINEUX

(30) Priorität: 03.02.2006 EP 06002296
(43) Veröffentlichungstag der Anmeldung: 29.10.2008
(73) Patentinhaber: BASF SE, 67056 Ludwigshafen (DE)
(72) Erfinder: VANTIEGHEM, Herve, R., 76297 Stutensee (DE); BAUER, Matthias, 90453 Nürnberg (DE); HAASE, Andreas, 68167 Mannheim (DE)
(86) Internationale Anmeldenummer: PCT/EP2007/050998
(87) Internationale Veröffentlichungsnummer: WO 2007/090788

(56) Entgegenhaltungen:
- WO-A-03/099010
- WO-A-2004/023875
- WO-A-2005/014765
- WO-A-2005/108533

## Beschreibung

Die vorliegende Erfindung betrifft die Verwendung bestimmter Fungizide zur Erhöhung der Qualität und gegebenenfalls der Quantität von Rapserzeugnissen Sie betrifft auch die Verwendung dieser Fungizide zur Verringerung der Sprödigkeit der Samenschalen von Rapspflanzen Außerdem betrifft sie Erzeugnisse die aus Rapspflanzen die mit diesen Fungiziden behandelt wurden, erhältlich sind, z.B. Öle oder Samen aus entsprechend behandelten Rapspflanzen Des Weiteren betrifft sie auch regenerative Kraftstoffe, die das erfindungsgemäße Öl und/oder Umsetzungsprodukte davon enthalten. Schließlich betrifft sie ein Verfahren zur Verbesserung der Verbrennung in Motoren und Feuerungsanlagen, bei dem man diese zumindest teilweise mit einem geeigneten erfindungsgemäßen Rapserzeugnis betreibt.

Aufgrund der absehbaren Erschöpfung fossiler Brennstoffe richtet sich der Fokus der Energiebranche zunehmend auch auf regenerative Kraft- und Brennstoffe, wie beispielsweise Pflanzenöle, Biodiesel und Bioethanol. Als Biodiesel bezeichnet man die Niederalkylester, insbesondere die Methylester, von Fettsäuren. Diese sind dadurch erhältlich, dass man Pflanzenöle, wie Rapsöl, aber auch Altfette und Altöle sowie tierische Fette, die in der Natur als Triglyceride vorkommen, mit einem Alkohol, wie Methanol, umestert. Pflanzenöle erhält man in der Regel durch Pressen der ölhaltigen Pflanzenteile von Ölpflanzen, z.B. von ölhaltigen Früchten oder Samen. Beim Kaltpressverfahren und insbesondere beim Warmpressverfahren erhält man jedoch ein Öl, das einen relativ hohen Gehalt an Phosphorverbindungen und Mineralverbindungen, wie Alkali- und insbesondere Erdalkalimetallverbindungen, vor allem Calcium- und Magnesiumverbindungen, besitzt. Diese Verbindungen, die nicht nur im Öl, sondern auch in Umsetzungsprodukten davon enthalten sein können, können einen negativen Einfluss auf die Verbrennung in Motoren und Feuerungsanlagen haben. Zudem wirken sie sich negativ auf die Materialbeständigkeit von Motoren aus. Negative Auswirkungen auf die Abgasanlagen sind auch nicht auszuschließen. So führen die genannten Verbindungen beim Verbrennungsvorgang zu einer nicht unerheblichen Aschebildung, die beispielsweise Partikelfilter von Dieselfahrzeugen belastet. Die Asche kann auch nicht durch Regeneration des Partikelfilters entfernt werden, sondern wird im Filter festgehalten, was zu einer Erhöhung des Abgasgegendrucks führt. Ein erhöhter Abgasgegendruck führt wiederum zu Funktionsstörungen im Dieselmotor. Phosphorverbindungen wirken zudem als Katalysatorgifte und verringern beispielsweise die Lebensdauer von Oxidationskatalysatoren in Dieselfahrzeugen und von SCR-Katalysatoren in Nutzfahrzeugen, wie Lastkraftwagen und Traktoren. Auch in Heizanlagen können ähnliche Probleme auftreten. Um diese Probleme zu vermeiden und auch um die in nächster Zukunft zu erwartende DIN-Norm für Rapsöl als Treibstoff (E DIN 51605) erfüllen zu können, werden derzeit Biodiesel bzw. die zugrunde liegenden Pflanzenöle aufwendigen Aufarbeitungsverfahren unterworfen.

Selbst bei Einhaltung der oben genannten DIN Norm für Rapsöl ist nicht gewährleistet, dass es beim Transport, bei der Lagerung oder der Verbrennung von Pflanzenölen oder deren Umsetzungsprodukten nicht zu Problemen kommt. So führen bestimmte Phosphorverbindungen, insbesondere Phospholipide, selbst wenn sie in einer Menge unterhalb des durch die DIN 51605 vorgegebenen Phosphor-Grenzwerts im Pflanzenöl enthalten sind, zu einem Verkleben von Kraftstofffiltern in Motoren, Tanks und industriellen Produktionsanlagen. Es ist daher wünschenswert, den Phosphorgehalt und auch den Gehalt anderer unerwünschter Begleitstoffe im Öl noch stärker zu senken als durch die DIN 51605 vorgegeben wird.
Auch bei der Verwendung von Pflanzenölen im Lebensmittelbereich und im Kosmetikbereich oder von Ölpflanzenerzeugnissen, z.B. von Samen und Presskuchen, im Futtermittelbereich, können Phosphorverbindungen, insbesondere Phosphate, z.B. aus gesundheitlichen Gründen problematisch sein.

Die oben genannten Phosphor- und Mineralverbindungen stammen zum einen aus den ölliefernden Pflanzenteilen, wie Fruchtfleisch oder Samenfleisch, selbst. Bei der Gewinnung des Pflanzenöls aus den Samen von Samenölpflanzen stammen die Phosphorverbindungen und/oder die Alkalimetall- und Erdalkalimetallverbindungen jedoch zumindest teilweise auch aus der Samenschale, aus der sie vor allem bei Anwendung hoher Drücke beim Pressen extrahiert werden. Bei der Anwendung hoher Drücke, die für eine ausreichend hohe Ölausbeute erforderlich sind, reißt die in der Regel sehr spröde Samenschale. Dadurch gelangen nicht nur mikroskopisch oder makroskopisch große Bruchstücke in das Öl, die dann als Trübstoffe sichtbar sind; auch die Oberfläche der Samenschale vergrößert sich, wodurch die Extraktion unerwünschter Begleitstoffe verstärkt wird.

Da als regenerative Kraftstoffe grundsätzlich alle Pflanzenteile, wie Presskuchen und Samen, eingesetzt werden können, ist es auch für diese Ölpflanzenerzeugnisse von Bedeutung, einen möglichst niedrigen Phosphor- und Mineralgehalt aufzuweisen.

Ein weiteres Problem von Ölpflanzenerzeugnissen und insbesondere von Pflanzenölen und gegebenenfalls auch von Umsetzungsprodukten davon ist deren Säuregehalt, der zu einer Korrosion in Motoren und Feuerungsanlagen, z.B. in Heizkesseln, führen kann.

Wünschenswert ist weiterhin die Bereitstellung von Pflanzenölen und Umsetzungsprodukten davon mit einer möglichst niedrigen Iodzahl. Die Iodzahl ist ein Maß für die Anzahl der C-C-Doppelbindungen in den Fettsäuremolekülen, die dem Öl bzw. dessen Umsetzungsprodukten zugrunde liegen, d.h. für den ungesättigten Charakter des Öls. Öle mit hoher Iodzahl sind oxidationsempfindlicher und verharzen somit schneller als Öle mit einem höheren Sättigungsgrad, so dass ihre Lagerstabilität niedriger ist. Insgesamt ist die Bereitstellung von Pflanzenölen bzw. von Umsetzungsprodukten davon mit einer möglichst hohen Oxidationsstabilität wünschenswert, denn eine ausreichende Oxidationsstabilität, die ein wichtiger Aspekt der Lagerstabilität ist, ist für eine erfolgreiche Kommerzialisierung unabdingbar. Die Oxidationsstabilität wird nicht nur durch den Sättigungsgrad des Öls bestimmt, sondern auch durch die Gegenwart von Antioxidantien, wie Vitamin A oder Vitamin E.

Ein weiteres Problem von Pflanzenölen, insbesondere unter dem Aspekt ihrer Verwendung im Kraftstoffbereich, ist ihre im Vergleich zu mineralischen Kraftstoffen relativ hohe Viskosität. Hohe Viskositäten führen aufgrund des schlechteren Fließ-, Pump- und Zerstäubungsverhaltens an den Einspritzdüsen (Tröpfchenspektrum und Geometrie des Einspritzstrahls) unter anderem zu Kaltstartproblemen. Es ist daher wünschenswert, Pflanzenöle mit verringerter Viskosität, insbesondere mit verringerter kinematischer Viskosität, bereitstellen zu können.

Auch weitere Verbesserungen der Eigenschaften von Ölpflanzenerzeugnissen, insbesondere von Pflanzenölen und ihren Umsetzungsprodukten, im Hinblick auf ihre Verwertung zur Energiegewinnung ist wünschenswert, beispielsweise ein höherer Flammpunkt, ein höherer Heizwert, eine höhere Cetanzahl, ein geringerer Koksrückstand, ein verringerter Schwefelgehalt, ein verringerter Stickstoffgehalt, ein verringerter Chlorgehalt und ein geringerer Gehalt an bestimmten (Halb)Metallverbindungen, wie Zink-, Zinn-, Bor- und Siliciumverbindungen von Ölpflanzenerzeugnissen, vor allem von Pflanzenöl oder Umsetzungsprodukten.

Der Flammpunkt bezeichnet die gemessene Temperatur, bei der sich in einem geschlossenen Gefäß Dämpfe entwickeln, die zu einem durch Fremdzündung entflammbaren Dampf/Luft-Gemisch führen. Der Flammpunkt wird zur Einstufung von Flüssigkeiten in Gefahrenstoffklassen herangezogen. Selbstverständlich ist es wünschenswert, Pflanzenöle und Umsetzungsprodukte davon mit einem möglichst hohen Flammpunkt bereitzustellen.

Der Heizwert ist ein Maß für die Energiemenge, die bei der vollständigen Verbrennung eines Stoffes pro Volumen oder pro Masse freigesetzt wird. Der obere Heizwert (auch als Brennwert bezeichnet) enthält auch die Energie, die bei der Kondensation des bei der Verbrennung entstehenden Wasserdampfes freigesetzt wird, während der untere Heizwert davon bereinigt ist. Es versteht sich von selbst, dass Ölerzeugnisprodukte mit einem möglichst hohen unteren Heizwert wünschenswert sind.

Die Cetanzahl ist ein Maß für die Zündwilligkeit eines Dieselkraftstoffs und selbstverständlich sind zündungswillige Kraftstoffe besonders erwünscht.

Der Koksrückstand besteht aus organischem und anorganischem Material, das bei einer unvollständigen Verbrennung von Kraftstoff entsteht und ist ein Maß für die Verkokungsneigung eines Kraftstoffs an den Einspritzdüsen und für die Rückstandsbildung im Verbrennungsraum. Die Verkokung von Einspritzdüsen führt zu einer schlechteren Verteilung des eingespritzten Kraftstoffs und damit zu einer Verringerung der Motorenleistung. Die Verkokung wird in Motoren zur Zeit vor allem durch Zugabe spezieller Detergenzien und Dispergatoren unterdrückt. Kraftstoffe, die eine geringere Verkokungsneigung haben, sind natürlich wünschenswert.

Die Reduzierung der Gehalte an Schwefel, Stickstoff, Chlor und den genannten (Halb)Metallen soll vor allem der Verringerung des Ausstoßes von gesundheits- unweltschädlichen Substanzen, wie Schwefelsäure und andere Schwefelverbindungen sowie nitrose Gase, der Verringerung der korrosiven Wirkung von Ölpflanzenprodukten, vor allem von Pflanzenölen und Umsetzungsprodukten davon, auf damit in Kontakt kommende Metallteile und die Verringerung der Aschebildung, z.B. durch die genannten (Halb)Metallverbindungen, dienen.

WO 03/099010 beschreibt die Verwendung von Fluquinconazol zur Saatgutbehandlung von Raps.

WO 2004/023875 beschreibt Mittel, die ein Triazolfungizid und eine aliphatische Carbonsäure enthalten, sowie deren Verwendung als Bioregulator im Pflanzenanbau.

Aufgabe der vorliegenden Erfindung war es, insgesamt die Qualität und gegebenenfalls auch die Quantität von Ölpflanzenerzeugnissen, z.B. von Pflanzenölen und deren Umsetzungsprodukten, insbesondere im Hinblick auf eine spätere Verwendung im Kraftstoffbereich, aber auch im Lebensmittel- und Futtermittelbereich, zu steigern, ohne dabei auf aufwendige Aufbereitungs- und Reinigungsschritte zurückgreifen zu müssen.

Überraschenderweise wurde festgestellt, dass man höherqualitative Ölpflanzenerzeugnisse erhält, wenn man Rapspflanzen oder deren Saatgut mit bestimmten Fungiziden behandelt. Speziell bei Rapspflanzen wurde festgestellt, dass die Behandlung dieser Pflanzen bzw. ihres Saatgutes mit den Fungiziden zu einer verringerten Sprödigkeit der Samenschalen führt.

Die Aufgabe wurde dementsprechend gelöst durch die Verwendung von Fungiziden, die ausgewählt sind unter Aryl- und Heterocyclylaniliden, Carbamaten, Dicarboximiden, Azolen, Strobilurinen und Morpholinen, zur Erhöhung der Qualität und gegebenenfalls der Quantität von Ölpflanzenerzeugnissen,
wobei die Ölpflanzenerzeugnisse ausgewählt sind unter dem aus Raps gewonnenen Öl und Umsetzungsprodukten des Öls, wobei es sich bei den Umsetzungsprodukten des Öls um die Umesterungsprodukte des Öls mit C₁-C₄-Alkoholen handelt.

Unter "Erhöhung der Qualität" versteht man im Rahmen der vorliegenden Erfindung, dass wenigstens ein Rapserzeugnis insbesondere im Hinblick auf seine Verwendung zur Energiegewinnung, vor allem im Brenn- oder Kraftstoffbereich verbesserte Eigenschaften besitzt. "Erhöhung der Qualität" bedeutet somit, dass wenigstens ein Rapserzeugnis wenigstens eines der folgenden Kriterien erfüllen muss:
(i) Verringerung des Phosphorgehalts wenigstens eines Ölpflanzenerzeugnisses;
(ii) Verringerung des Alkali- und/oder Erdalkalimetallgehalts wenigstens eines Ölpflanzenerzeugnisses;
(iii) Erhöhung der Oxidationsstabilität wenigstens eines Ölpflanzenerzeugnisses;
(iv) Verringerung der Gesamtverschmutzung wenigstens eines Ölpflanzenerzeugnisses;
(v) Erniedrigung der Iodzahl wenigstens eines Ölpflanzenerzeugnisses;
(vi) Erniedrigung der Säurezahl wenigstens eines Ölpflanzenerzeugnisses;
(vii) Erniedrigung der kinematischen Viskosität wenigstens eines Ölpflanzenerzeugnisses;
(viii) Verringerung des Schwefelgehalts wenigstens eines Ölpflanzenerzeugnisses;
(ix) Erhöhung des Flammpunkts wenigstens eines Ölpflanzenerzeugnisses;
(xi) Verringerung des Koksrückstands wenigstens eines Ölpflanzenerzeugnisses; und
(xii) Erhöhung der Cetanzahl wenigstens eines Ölpflanzenerzeugnisses.

Die erhöhte Qualität und gegebenenfalls erhöhte Quantität des wenigstens einen Ölpflanzenerzeugnisses bezieht sich auf eine Verbesserung im Vergleich zur Qualität und gegebenenfalls Quantität des gleichen Rapserzeugnisses das aus der gleichen Rapspflanze (in Bezug auf Art und Sorte) unter gleichen Wachstumsbedingungen der Pflanze, jedoch ohne die Behandlung der Pflanze oder ihres Saatguts mit den spezifizierten Fungiziden, auf die gleiche Art und Weise (bezüglich Ernte, Verarbeitung etc.) gewonnen wird.

Ein weiterer Gegenstand der Erfindung ist die Verwendung der oben genannten Fungizide zur Verringerung der Sprödigkeit der Samenschalen von Raps.

Ölpflanzen sind Pflanzen, aus deren Pflanzenteile, insbesondere deren Früchte und/oder Samen, Öl gewonnen wird. Sie können in zwei Hauptgruppen unterteilt werden:
- Fruchtfleischölpflanzen, bei denen das Öl aus dem fetthaltigen Fruchtfleisch gewonnen wird. Hierzu gehören beispielsweise der Olivenbaum und die Ölpalme.
- Samenölpflanzen, bei denen das Öl aus den Samen gewonnen wird. Hierzu gehören beispielsweise Raps, Rübsen, Senf, Ölrettich, Leindotter, Ölrauke, Krambe, Sonnenblume, Saflor, Distel, Ringelblume, Sojabohne, Lupine, Lein, Hanf, Ölkürbis, Mohn, Mais und Nüsse, insbesondere Arachide (Erdnüsse).

Zu den Samenölpflanzen kann man auch die beiden oben bei den Fruchtfleischölpflanzen genannten Arten (Olivenbaum und Ölpalme) zählen, denn aus beiden wird auch der Samen (Kern) zur Ölgewinnung verwendet.

Im Rahmen der vorliegenden Erfindung werden die Begriffe "Frucht" und "Samen", die der Definition der Begriffe "Fruchtfleischölpflanzen" und "Samenölpflanzen" zugrunde liegen, nicht streng morphologisch verwendet, d. h. es wird nicht danach unterschieden, aus welchen Blütenteilen der Samen bzw. die Frucht entstanden ist. Vielmehr wird unter dem Begriff "Samen" im Rahmen der vorliegenden Erfindung derjenige Pflanzenteil verstanden, der als solches, d. h. ohne weitere Aufbereitung, als Saatgut verwendet werden kann. Die Frucht ist hingegen die Gesamtheit der Organe, die aus einer Blüte hervorgehen, die die Samen bis zu deren Reife umschließen. Eine Frucht umfasst einen oder mehrere Samen, die von einer Fruchtwand, dem Pericarb, umgeben sind. Im Sinne der vorliegenden Erfindung umfasst eine Frucht zudem Fruchtfleisch, das sich leicht vom Samen im morphologischen Sinn abtrennen lässt. Außerdem ist bei der Frucht im Sinne der Erfindung die Fruchtwand nicht untrennbar mit dem Samen bzw. der Samenschale verwachsen. Samenölpflanzen umfassen somit im Sinne der Erfindung sowohl Ölpflanzen, bei denen das Öl aus Samen im morphologischen Sinn gewonnen wird, als auch Ölpflanzen, bei denen das Öl aus solchen Früchten gewonnen wird, bei denen die Fruchtwand untrennbar mit dem Samen verwachsen ist, wie dies beispielsweise bei Sonnenblumen, Nüssen oder Mais der Fall ist. Dementsprechend ist im Rahmen der vorliegenden Erfindung der Begriff "Samenschale" nicht auf die Schale von Samen in morphologischem Sinne beschränkt, sondern umfasst auch die Fruchtschalen (Fruchtwand) von Früchten, bei denen die Fruchtwand untrennbar mit dem Samen verwachsen ist und die somit unter den erfindungsgemäß verwendeten Begriff "Samen" fallen.

Unter Ölpflanzenerzeugnissen versteht man im Rahmen der vorliegenden Erfindung Pflanzenöle und deren Umesterungsprodukte mit C₁-C₄-Alkoholen, vorzugsweise mit Methanol die als Biodiesel eingesetzt werden können). Unter Umesterungsprodukten des Öls mit C₁-C₄-Alkoholen versteht man die C₁-C₄-Alkylester der im Öl vornehmlich als Glyceride (v.a. als Triglyceride) vorliegenden Fettsäuren.

Unter Ölen versteht man im Rahmen der vorliegenden Erfindung, soweit nicht anders definiert, Rapsöl.

Des Weiteren betrifft die Erfindung ein Verfahren zur Erhöhung der Qualität und gegebenenfalls der Quantität von Ölpflanzenerzeugnissen, bei dem man eine Ölpflanze oder Pflanzenteile davon während der Vegetationsphase der Pflanze (d.h. in der Zeitspanne vom Auflaufen bis zur Ernte) oder deren Saatgut mit wenigstens einem der oben genannten Fungizide behandelt und die Ölpflanzenerzeugnisse gewinnt, wobei es sich bei den Ölpflanzen um Raps handelt und die Ölpflanzenerzeugnisse ausgewählt sind unter dem aus Raps gewonnenen Öl und Umsetzungsprodukten des Öls, wobei es sich bei den Umsetzungsprodukten des Öls um die Umesterungsprodukte des Öls mit C₁-C₄-Alkoholen handelt. Die Erhöhung der Qualität und gegebenenfalls der Quantität von Ölpflanzenerzeugnissen ist wie oben definiert. Ferner betrifft die Erfindung auch ein Verfahren zur Verringerung der Sprödigkeit der Samenschalen von Raps, bei dem man Raps oder Pflanzenteile davon während der Vegetationsphase der Pflanze (d.h. in der Zeitspanne vom Auflaufen bis zur Ernte) oder das Saatgut der Pflanze mit wenigstens einem der vorstehend genannten Fungizide behandelt. Gegenstand der Erfindung ist schließlich ein Verfahren zur Verbesserung der Verbrennung in Motoren und Feuerungsanlagen, bei dem man diese zumindest teilweise mit einem Ölpflanzenerzeugnis enhältlich durch das oben beschriebene Verfahren betreibt.

Im Rahmen der vorliegenden Erfindung haben die generisch verwendeten Ausdrücke folgende Bedeutung:
Halogen steht für Fluor, Chlor, Brom oder Iod und insbesondere für Fluor, Chlor oder Brom.

Der Ausdruck "teilweise oder vollständig halogeniert" bedeutet, das ein oder mehrere, z. B. 1, 2, 3 oder 4 oder alle Wasserstoffatome eines bestimmten Rests durch Halogenatome, insbesondere durch Fluor oder Chlor, ersetzt sind.

Der Begriff "Cₘ-Cₙ-Alkyl" (auch in Cₘ-Cₙ-Haloalkyl, Cₘ-Cₙ-Alkylthio, Cₘ-Cₙ-Haloalkylthio, Cₘ-Cₙ-Alkylsulfinyl und Cₘ-Cₙ-Alkylsulfonyl) steht für einen linearen oder verzweigten gesättigten Kohlenwasserstoffrest mit m bis n, z. B. 1 bis 8, Kohlenstoffatomen. So steht C₁-C₄-Alkyl beispielsweise für Methyl, Ethyl, Propyl, Isopropyl, n-Butyl, sec-Butyl, Isobutyl oder tert-Butyl. C₁-C₈-Alkyl steht darüber hinaus beispielsweise für Pentyl, 1-Methylbutyl, 2-Methylbutyl, 3-Methylbutyl, 2,2-Dimethylpropyl, 1-Ethylpropyl, Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, Heptyl, Octyl, 2-Ethylhexyl und Konstitutionsisomere davon.

Cₘ-Cₙ-Haloalkyl (oder Cₘ-Cₙ-Halogenalkyl) steht für einen linearen oder verzweigten Alkylrest mit m bis n Kohlenstoffatomen, in welchem 1 oder mehrere Wasserstoffatome durch Halogenatome, insbesondere Fluor oder Chlor, ersetzt sind. So steht C₁-C₈-Haloalkyl für einen linearen oder verzweigten C₁-C₈-Alkylrest, in welchem 1 oder mehrere Wasserstoffatome durch Halogenatome, insbesondere Fluor oder Chlor, ersetzt sind. Insbesondere steht C₁-C₈-Haloalkyl für C₁-C₂-Haloalkyl. C₁-C₂-Haloalkyl steht beispielsweise für Chlormethyl, Dichlormethyl, Trichlormethyl, Brommethyl, Fluormethyl, Difluormethyl, Trifluormethyl, Chlorfluormethyl, Dichlorfluormethyl, Chlordifluormethyl, 1-Chlorethyl, 2-Chlorethyl, 1-Fluorethyl, 2-Fluorethyl, 2,2-Difluorethyl, 2,2,2-Trifluorethyl, Pentafluorethyl und dergleichen.

Cₘ-Cₙ-Alkoxy steht für einen linearen oder verzweigten Alkylrest mit m bis n Kohlenstoffatomen, der über ein Sauerstoffatom gebunden ist. Dementsprechend steht C₁-C₄-Alkoxy für einen C₁-C₄-Alkylrest, der über ein Sauerstoffatom gebunden ist. Beispiele hierfür sind Methoxy, Ethoxy, Propoxy, Isopropoxy, Butoxy, sec-Butoxy, Isobutoxy und tert-Butoxy. Beispiele für C₁-C₈-Alkoxy sind darüber hinaus Pentyloxy, Hexyloxy, Octyloxy und deren Konstitutionsisomere.

C₁-C₈-Haloalkoxy steht für einen linearen oder verzweigten C₁-C₈-Alkylrest, der über ein Sauerstoffatom gebunden ist und in welchem eine oder mehrere Wasserstoffatome durch ein Halogenatom, insbesondere durch Fluor oder Chlor, ersetzt sind. Beispiele hierfür sind Chlormethoxy, Dichlormethoxy, Trichlormethoxy, Fluormethoxy, Difluormethoxy, Trifluormethoxy, Brommethoxy, Chlorfluormethoxy, Dichlorfluormethoxy, Chlordifluormethoxy, 1-Chlorethoxy, 1-Bromethoxy, 1-Fluorethoxy, 2-Chlorethoxy, 2-Bromethoxy, 2-Fluorethoxy, 2,2-Difluorethoxy, 2-Chlor-2-fluorethoxy, 2,2-Dichlorethoxy, 2,2,2-Trichlorethoxy, 2,2,2-Trifluorethoxy, Pentafluorethoxy, Pentachlorethoxy und dergleichen.

C₁-C₈-Alkylthio, C₁-C₈-Alkylsulfinyl und C₁-C₈-Alkylsulfonyl stehen für einen linearen oder verzweigten C₁-C₈-Alkylrest, der über ein Schwefelatom (Alkylthio), eine S(O) - Gruppe (Alkylsulfinyl) oder S(O)₂-Gruppe (Alkylsulfonyl) gebunden ist. Beispiele für C₁-C₈-Alkylthio umfassen Methylthio, Ethylthio, Propylthio, Isopropylthio, n-Butylthio und dergleichen. Beispiele für C₁-C₈-Alkylsulfinyl umfassen Methylsulfinyl, Ethylsulfinyl, Propylsulfinyl, Isopropylsulfinyl, n-Butylsulfinyl und dergleichen. Beispiele für C₁-C₈-Alkylsulfonyl umfassen Methylsulfonyl, Ethylsulfonyl, Propylsulfonyl, Isopropylsulfonyl, n-Butylsulfonyl und dergleichen.

C₁-C₄-Alkylthio steht für einen linearen oder verzweigten C₁-C₄-Alkylrest, der über ein Schwefelatom gebunden ist. Beispiele hierfür umfassen Methylthio, Ethylthio, Propylthio, Isopropylthio, n-Butylthio und Konstitutionsisomere davon.

C₁-C₈-Haloalkylthio steht für einen linearen oder verzweigten C₁-C₈-Alkylrest, der über ein Schwefelatom gebunden ist und in welchem eine oder mehrere Wasserstoffatome durch ein Halogenatom, insbesondere durch Fluor oder Chlor, ersetzt sind. Beispiele hierfür sind Chlormethylthio, Dichlormethylthio, Trichlormethylthio, Fluormethylthio, Difluormethylthio, Trifluormethylthio, Brommethylthio, Chlorfluormethylthio, Dichlorfluormethylthio, Chlordifluormethylthio, 1-Chlorethylthio, 1-Bromethylthio, 1-Fluorethylthio, 2-Chlorethylthio, 2-Bromethylthio, 2-Fluorethylthio, 2,2-Difluorethylthio, 2-Chlor-2-fluorethylthio, 2,2-Dichlorethylthio, 2,2,2-Trichlorethylthio, 2,2,2-Trifluorethylthio, Pentafluorethylthio, Pentachlorethylthio und dergleichen.

Cₘ-Cₙ-Alkoxy-Cₘ-Cₙ-alkyl steht für eine Cₘ-Cₙ-Alkylgruppe, in der ein Wasserstoffatom durch eine Cₘ-Cₙ-Alkoxygruppe ersetzt ist. Dementsprechend steht C₁-C₈-Alkoxy-C₁-C₈-alkyl für eine C₁-C₈-Alkylgruppe, in der ein Wasserstoffatom durch eine C₁-C₈-Alkoxygruppe ersetzt ist. Beispiele hierfür sind Methoxymethyl, Ethoxymethyl, Propoxymethyl, Methoxyethyl, Ethoxyethyl, Propoxyethyl, Methoxypropyl, Ethoxypropyl, Propoxypropyl und dergleichen.

Cₘ-Cₙ-Alkylthio-Cₘ-Cₙ-alkyl steht für eine Cₘ-Cₙ-Alkylgruppe, in der ein Wasserstoffatom durch eine Cₘ-Cₙ-Alkylthiogruppe ersetzt ist. Dementsprechend steht C₁-C₈-Alkylthio-C₁-C₈-alkyl für eine C₁-C₈-Alkylgruppe, in der ein Wasserstoffatom durch eine C₁-C₈-Alkylthiogruppe ersetzt ist. Beispiele hierfür sind Methylthiomethyl, Ethylthiomethyl, Propylthiomethyl, Methylthioethyl, Ethylthioethyl, Propylthioethyl, Methylthiopropyl, Ethylthiopropyl, Propylthiopropyl und dergleichen.

Cₘ-Cₙ-Haloalkylthio-Cₘ-Cₙ-alkyl steht für eine Cₘ-Cₙ-Alkylgruppe, in der ein Wasserstoffatom durch eine Cₘ-Cₙ-Haloalkylthiogruppe ersetzt ist. Dementsprechend steht C₁-C₈-Haloalkylthio-C₁-C₈-alkyl für eine C₁-C₈-Alkylgruppe, in der ein Wasserstoffatom durch eine C₁-C₈-Haloalkylthiogruppe ersetzt ist. Beispiele hierfür sind Chlormethylthiomethyl, Dichlormethylthiomethyl, Trichlormethylthiomethyl, Chlorethylthiomethyl, Dichlorethylthiomethyl, Trichlorethylthiomethyl, Tetrachlorethylthiomethyl, Pentachlorethylthiomethyl und dergleichen.

Carboxy steht für eine Gruppe -COOH.

C₁-C₈-Alkylcarbonyl steht für ein Gruppe -CO-R, worin R für C₁-C₈-Alkyl steht.

C₁-C₈-Alkyloxycarbonyl (auch als C₁-C₈-Alkoxycarbonyl bezeichnet) steht für eine Gruppe -C(O)O-R, worin R für C₁-C₈-Alkyl steht.

C₁-C₈-Alkylcarbonyloxy steht für eine Gruppe -OC(O)-R, worin R für C₁-C₈-Alkyl steht.

C₁-C₈-Alkylaminocarbonyl steht für eine Gruppe -CO-NH-R, worin R für C₁-C₈-Alkyl steht.

Di-(C₁-C₈-Alkyl)-aminocarbonyl steht für eine Gruppe -CO-N(RR'), worin R und R' unabhängig voneinander für C₁-C₈-Alkyl stehen.

C₂-C₈-Alkenyl steht für einen linearen oder verzweigten Kohlenwasserstoffrest mit 2 bis 8 Kohlenstoffatomen und einer Doppelbindung in beliebiger Position. Beispiele hierfür sind Ethenyl, 1-Propenyl, 2-Propenyl (Allyl), 1-Methylethenyl, 1-, 2- und 3-Butenyl, 1-Methyl-1-propenyl, 2-Methyl-1-propenyl, 1-, 2-, 3- und 4-Pentenyl, 1-, 2-, 3-, 4- und 5-Hexenyl, 1-, 2-, 3-, 4-, 5- und 6-Hepetenyl, 1-, 2-, 3-, 4-, 5-, 6- und 7-Octenyl und Konstitutionsisomere davon.

C₂-C₈-Alkenyloxy steht für einen C₂-C₈-Alkenylrest, der über ein Sauerstoffatom gebunden ist. Beispiele hierfür sind Ethenyloxy, Propenyloxy und dergleichen.

C₂-C₈-Alkenylthio steht für einen C₂-C₈-Alkenylrest, der über ein Schwefelatom gebunden ist. Beispiele hierfür sind Ethenylthio, Propenylthio und dergleichen.

C₂-C₈-Alkenylamino steht für eine Gruppe -NH-R, worin R für C₂-C₈-Alkenyl steht.

N-C₂-C₈-Alkenyl-N-C₁-C₈-alkylamino steht für eine Gruppe -N(RR'), worin R für C₂-C₈-Alkenyl und R' für C₁-C₈-Alkyl steht.

C₂-C₈-Alkinyl steht für einen linearen oder verzweigten Kohlenwasserstoffrest mit 2 bis 8 Kohlenstoffatomen und wenigstens einer Dreifachbindung. Beispiele hierfür sind Ethinyl, Propinyl, 1- und 2-Butinyl und dergleichen.

C₂-C₈-Alkinyloxy steht für einen C₂-C₈-Alkinylrest, der über ein Sauerstoffatom gebunden ist. Beispiele hierfür sind Propinyloxy, Butinyloxy und dergleichen.

C₂-C₈-Alkinylthio steht für einen C₂-C₈-Alkinylrest, der über ein Schwefelatom gebunden ist. Beispiele hierfür sind Ethinylthio, Propinylthio und dergleichen.

C₂-C₈-Alkinylamino steht für eine Gruppe -NH-R, worin R für C₂-C₈-Alkinyl steht.

N-C₂-C₈-Alkinyl-N-C₁-C₈-alkylamino steht für eine Gruppe -N(RR'), worin R für C₂-C₈-Alkinyl und R' für C₁-C₈-Alkyl steht.

C₃-C₈-Cycloalkyl steht für einen monocyclischen 3- bis 8-gliedrigen gesättigten cycloaliphatischen Rest. Beispiele hierfür sind Cyclopropyl, Cyclobutyl, Cyclopentyl, Cyclohexyl, Cycloheptyl und Cyclooctyl.

C₃-C₈-Cycloalkyloxy (oder C₃-C₈-Cycloalkoxy) steht für einen über Sauerstoff gebundenen C₃-C₈-Cycloalkylrest. Beispiele hierfür sind Cyclopropyloxy, Cyclobutyloxy, Cyclopentyloxy, Cyclohexyloxy, Cycloheptyloxy und Cyclooctyloxy.

C₃-C₈-Cycloalkylthio steht für einen über ein Schwefelatom gebundenen C₃-C₈-Cycloalkylrest. Beispiele hierfür sind Cyclopropylthio, Cyclobutylthio, Cyclopentylthio, Cyclohexylthio, Cycloheptylthio und Cyclooctylthio.

C₃-C₈-Cycloalkylamino steht für eine Gruppe -NH-R, worin R für C₃-C₈-Cycloalkyl steht.

N-C₃-C₈-Cycloalkyl-N-C₁-C₈-alkylamino steht für eine Gruppe -N(RR'), worin R für C₃-C₈-Cycloalkyl und R' für C₁-C₈-Alkyl steht.

C₃-C₈-Cycloalkenyl steht für einen monocyclischen 3- bis 8-gliedrigen ungesättigten cycloaliphatischen Rest mit wenigstens einer Doppelbindung. Beispiele hierfür sind Cyclopropenyl, Cyclobutenyl, Cyclopentenyl, Cyclopentadienyl, Cyclohexyl, Cyclohexadienyl, Cycloheptenyl, Cycloheptadienyl, Cyclooctyl, Cyclooctadienyl, Cyclooctatrienyl und Cyclooctatetraenyl.

C₃-C₈-Cycloalkenyloxy steht für einen über Sauerstoff gebundenen C₃-C₈-Cycloalkenylrest. Beispiele hierfür sind Cyclopropenyloxy, Cyclobutenyloxy, Cyclopentenyloxy, Cyclopentadienyloxy, Cyclohexenyloxy, Cyclohexadienyloxy, Cycloheptenyloxy, Cycloheptadienyloxy, Cyclooctenyloxy, Cyclooctadienyloxy, Cyclooctatrienyloxy und Cyclooctatetraenyloxy.

Cₘ-Cₙ-Alkylen steht für eine lineare oder verzweigte Alkylengruppe mit m bis n, z. B. 1 bis 8, Kohlenstoffatomen. So steht C₁-C₃-Alkylen beispielsweise für Methylen, 1,1- oder 1,2-Ethylen, 1,1-, 1,2-, 2,2- oder 1,3-Propylen. C₂-C₄-Alkylen steht beispielsweise für 1,1- oder 1,2-Ethylen, 1,1-, 1,2-, 2,2- oder 1,3-Propylen, 1,1-, 1,2-, 1,3- oder 1,4-Butylen. C₃-C₅-Alkylen steht beispielsweise für 1,1-, 1,2-, 2,2- oder 1,3-Propylen, 1,1-, 1,2-, 1,3- oder 1,4-Butylen, 1,1-Dimethyl-1,2-ethylen, 2,2-Dimethyl-1,2-ethylen, 1,1-, 1,2-, 1,3-, 1,4- oder 1,5-Pentylen und dergleichen.

Oxy-Cₘ-Cₙ-Alkylen steht für eine Gruppe -O-R-, worin R für Cₘ-Cₙ-Alkylen steht. So steht Oxy-C₂-C₄-Alkylen für eine Gruppe -O-R-, worin R für C₂-C₄-Alkylen steht. Beispiele hierfür sind Oxyethylen, Oxypropylen und dergleichen.

Oxy-Cₘ-Cₙ-Alkylenoxy steht für eine Gruppe -O-R-O-, worin R für Cₘ-Cₙ-Alkylen steht. So steht Oxy-C₂-C₄-Alkylenoxy für eine Gruppe -O-R-O-, worin R für C₁-C₃-Alkylen steht. Beispiele hierfür sind Oxymethylenoxy,Oxy-1,2-ethylenoxy, Oxy-1,3-propylenoxy und dergleichen

Cₘ-Cₙ-Alkenylen steht für eine lineare oder verzweigte Alkenylengruppe mit m bis n, z.B. 2 bis 8, Kohlenstoffatomen. So steht C₂-C₄-Alkylen beispielsweise für 1,1- oder 1,2-Ethenylen, 1,1-, 1,2- oder 1,3-Propenylen, 1,1-, 1,2-, 1,3- oder 1,4-Butylen. C₃-C₅-Alkenylen steht beispielsweise für 1,1-, 1,2- oder 1,3-Propenylen, 1,1-, 1,2-, 1,3- oder 1,4-Butenylen, 1,1-, 1,2-, 1,3-, 1,4- oder 1,5-Pentenylen und dergleichen.

Oxy-Cₘ-Cₙ-Alkenylen steht für eine Gruppe -O-R-, worin R für Cₘ-Cₙ-Alkenylen steht. So steht Oxy-C₂-C₄-Alkenylen für eine Gruppe -O-R-, worin R für C₂-C₄-Alkenylen steht. Beispiele hierfür sind Oxyethenylen, Oxypropenylen und dergleichen.

Oxy-Cₘ-Cₙ-Alkenylenoxy steht für eine Gruppe -O-R-O-, worin R für Cₘ-Cₙ-Alkenylen steht. So steht Oxy-C₂-C₄-Alkenylenoxy für eine Gruppe -O-R-O-, worin R für C₂-C₄-Alkenylen steht. Beispiele hierfür sind Oxyethenylenoxy, Oxypropenylenoxy und dergleichen.

C₁-C₄-Alkanole (= C₁-C₄-Alkohole) sind im Rahmen der vorliegenden Erfindung aliphatische C₁-C₄-Kohlenwasserstoffe, in denen ein Wasserstoffatom durch eine Hydroxygruppe ersetzt ist. Beispiele hierfür sind Methanol, Ethanol, Propanol, Isopropanol, n-Butanol, sec-Butanol, Isobutanol und tert-Butanol.

Aryl steht für einen gegebenenfalls substituierten aromatischen Kohlenwasserstoffrest mit 6 bis 14 Kohlenstoffatomen, wie Phenyl, Naphthyl, Anthracenyl oder Phenanthrenyl und insbesondere für Phenyl. Geeignete Substituenten sind beispielsweise Halogen, C₁-C₈-Alkyl, C₁-C₈-Alkoxy, OH, NO₂, CN, COOH, C₁-C₈-Alkylcarbonyl, C₁-C₈-Alkylcarbonyloxy, C₁-C₈-Alkyloxycarbonyl, NH₂, C₁-C₈-Alkylamino, Di-(C₁-C₈-Alkyl)-amino und andere nachfolgend genannte Substituenten.

Aryloxy steht für einen über ein Sauerstoffatom gebundenen Arylrest. Ein Beispiel hierfür ist gegebenenfalls substituiertes Phenoxy.

Arylthio steht für einen über ein Schwefelatom gebundenen Arylrest. Ein Beispiel hierfür ist gegebenenfalls substituiertes Phenylthio.

Aryl-C₁-C₈-alkyl steht für einen C₁-C₈-Alkylrest, bei dem ein Wasserstoffatom durch eine Arylgruppe substituiert ist. Beispiele hierfür sind Benzyl und 2-Phenylethyl. Aryl-C₂-C₈-alkenyl steht für einen C₂-C₈-Alkenylrest, bei dem ein Wasserstoffatom durch eine Arylgruppe substituiert ist. Ein Beispiel hierfür ist 2-Phenylethenyl (Styryl).

Aryl-C₂-C₈-alkinyl steht für einen C₂-C₈-Alkinylrest, bei dem ein Wasserstoffatom durch eine Arylgruppe substituiert ist. Ein Beispiel hierfür ist 2-Phenylethinyl.

Aryl-C₁-C₈-alkoxy steht für einen C₁-C₈-Alkoxyrest, bei dem ein Wasserstoffatom durch eine Arylgruppe substituiert ist.

Arylthio-C₁-C₄-alkyl steht für einen C₁-C₄-Alkylrest, bei dem ein Wasserstoffatom durch eine Arylgruppe substituiert ist, beispielweise für gegebenenfalls substituiertes Phenylthio-C₁-C₄-alkyl. Beispiele für gegebenenfalls substituiertes Phenylthio-C₁-C₄-alkyl sind Phenylthiomethyl (C₆H₅-S-CH₂) und Phenylthioethyl (C₆H₅-S-CH₂CH₂), wobei der Phenylrest substituiert sein kann, z.B. durch ein oder mehrere Chloratome.

Heterocyclyl steht für einen nicht-aromatischen gesättigten oder ungesättigten oder aromatischen ("Hetaryl") Heterocyclyl-Rest mit vorzugsweise 3 bis 7 Ringgliedern und 1, 2, 3 oder 4 Heteroatomen, die ausgewählt sind unter O, N und S und/oder Heteroatomgruppen, die ausgewählt sind unter SO, SO₂ und NR, worin R für H oder C₁-C₈-Alkyl steht, als Ringglieder und außerdem gegebenenfalls 1, 2 oder 3 Carbonylgruppen als Ringgliedern. Beispiele für nicht-aromatische Heterocyclyl-Gruppen umfassen Aziridinyl, Azetidinyl, Pyrrolidinyl, Pyrrolidinonyl, Pyrrolidindionyl, Pyrazolinyl, Pyrazolinonyl, Imidazolinyl, Imidazolinonyl, Imidazolindionyl, Pyrrolinyl, Pyrrolinonyl, Pyrrolindionyl, Pyrazolinyl, Imidazolinyl, Imidazolinonyl, Tetrahydrofuranyl, Dihydrofuranyl, 1,3-Dioxolanyl, Dioxolenyl, Thiolanyl, Dihydrothienyl, Oxazolidinyl, Isoxazolidinyl, Oxazolinyl, Isoxazolinyl, Thiazolinyl, Isothiazolinyl, Thiazolidinyl, Isothiazolidinyl, Oxathiolanyl, Piperidinyl, Piperidinonyl, Piperidindionyl, Piperazinyl, Pyridinonyl, Pyridindionyl, Pyridazinonyl, Pyridazindionyl, Pyrimidinonyl, Pyridazindionyl, Pyranyl, Dihydropyranyl, Tetrahydropyranyl, Dioxanyl, Thiopyranyl, Dihydrothiopyranyl, Tetrahydrothiopyranyl, Morpholinyl, Thiazinyl und dergleichen. Beispiele für aromatische Heterocyclyl-Gruppen (Hetaryl) umfassen Pyrrolyl, Furyl, Thienyl, Pyrazolyl, Imidazolyl, Triazolyl, Tetrazolyl, Oxazolyl, Isoxazolyl, Thiazolyl, Isothiazolyl, Thiadiazolyl, Oxadiazolyl, Pyridyl, Pyridazinyl, Pyrimidinyl, Pyrazinyl und Triazinyl.

Heterocyclyloxy bzw. Hetaryloxy steht für einen über einen Sauerstoffatom gebundenen Heterocyclyl- bzw. Hetarylrest.

Hetaryl-C₁-C₈-alkyl steht für einen C₁-C₈-Alkylrest, bei dem ein Wasserstoffatom durch eine Hetarylgruppe substituiert ist. Beispiele hierfür sind Pyrrolylmethyl, Pyridinylmethyl und dergleichen.

Hetaryl-C₂-C₈-alkenyl steht für einen C₂-C₈-Alkenylrest, bei dem ein Wasserstoffatom durch eine Hetarylgruppe substituiert ist.

Hetaryl-C₂-C₈-alkinyl steht für einen C₂-C₈-Alkinylrest, bei dem ein Wasserstoffatom durch eine Hetarylgruppe substituiert ist.

Hetaryl-C₁-C₈-alkoxy steht für einen C₁-C₈-Alkoxyrest, bei dem ein Wasserstoffatom durch eine Hetarylgruppe substituiert ist.

Die nachfolgend gemachten Angaben zu bevorzugten Merkmalen der Erfindung gelten sowohl für sich genommen als auch in Kombination mit anderen bevorzugten Merkmalen.

"Erhöhung der Qualität" bedeutet vorzugsweise, dass wenigstens ein Rapserzeugnis wenigstens eines der Kriterien (i) bis (xi), stärker bevorzugt (i) bis (viii), noch stärker bevorzugt (i) bis (vii), insbesondere (i) bis (iii) und (vi) und speziell (i) oder (ii) erfüllen muss.

Erfindungsgemäß sind die Ölpflanzen Raps.

Insbesondere für eine Anwendung im Lebensmittel- und Futtermittelbereich ist 0-Raps und insbesondere 00-Raps bevorzugt. Für andere Anwendungen sind auch andere Rapssorten, z.B. Erucasäure- und Glucosinolat-haltige Sorten, geeignet.

Die erfindungsgemäß eingesetzten Fungizide sind ausgewählt unter Aryl- und Heterocyclylaniliden (im Nachfolgenden auch als Anilid-Fungizide bezeichnet), Carbamaten, Dicarboximiden, Azolen, Strobilurinen und Morpholinen. In einer Ausführungsform der Erfindung sind die eingesetzten Fungizide ausgewählt unter Aryl- und Heterocyclylaniliden, Carbamaten, Dicarboximiden, Azolen und Strobilurinen.

Unter Aryl- und Heterocyclylaniliden (Anilid-Fungizide) versteht man Fungizide, die eine Carboxamidgruppe umfassen, in der sich der Aminteil von gegebenenfalls substituiertem Anilin ableitet und die Carbonylgruppe einen gegebenenfalls substituierten Aryl- oder Heterocyclylrest trägt.

Anilid-Fungizide und Verfahren zu ihrer Herstellung sind dem Fachmann grundsätzlich bekannt und beispielsweise in Farm Chemicals Handbook, Meister Publishing Company oder im Compendium of Pesticide Common Names, http://www.hclrss.demon.co.uk/ beschrieben, worauf hiermit in vollem Umfang Bezug genommen wird.

Bevorzugte Anilid-Fungizide sind solche der Formel I

A-CO-NHR¹

worin
- A: für eine Arylgruppe oder einen aromatischen oder nichtaromatischen 5- oder 6-gliedrigen Heterocyclus steht, der 1 bis 3 Heteroatome oder Heteroatom-haltige Gruppen, die ausgewählt sind unter O, S, N und NR², wobei R² für Wasserstoff oder C₁-C₈-Alkyl steht, als Ringglieder enthält, wobei die Arylgruppe oder der Heterocyclus gegebenenfalls 1, 2 oder 3 Substituenten aufweisen, die unabhängig voneinander ausgewählt sind unter Halogen, C₁-C₈-Alkyl, C₁-C₈-Haloalkyl, C₁-C₈-Alkoxy, C₁-C₈-Haloalkoxy, C₁-C₈-Alkylthio, C₁-C₈-Alkylsulfinyl und C₁-C₈-Alkylsulfonyl;
- R¹: für eine Phenylgruppe steht, die gegebenenfalls 1, 2 oder 3 Substituenten aufweist, die unabhängig voneinander ausgewählt sind unter C₁-C₈-Alkyl, C₂-C₈-Alkenyl, C₂-C₈-Alkinyl, C₁-C₈-Alkoxy, C₂-C₈-Alkenyloxy, C₂-C₈-Alkinyloxy, C₃-C₈-Cycloalkyl, C₃-C₈-Cycloalkenyl, C₃-C₈-Cycloalkyloxy, C₃-C₈-Cycloalkenyloxy, Phenyl und Halogen, wobei die aliphatischen und cycloaliphatischen Reste teilweise oder vollständig halogeniert sein können und/oder die cycloaliphatischen Reste durch 1, 2 oder 3 C₁-C₈-Alkylreste substituiert sein können und wobei Phenyl durch 1 bis 5 Halogenatome und/oder durch 1, 2 oder 3 Substituenten, die unabhängig voneinander ausgewählt sind unter C₁-C₈-Alkyl, C₁-C₈-Haloalkyl, C₁-C₈-Alkoxy, C₁-C₈-Haloalkoxy, C₁-C₈-Alkylthio und C₁-C₈-Haloalkylthio, substituiert sein kann und wobei die amidische Phenylgruppe R¹ gegebenenfalls mit einem gesättigten 5-gliedrigen Ring kondensiert ist, der gegebenenfalls durch 1, 2 oder 3 C₁-C₈-Alkylgruppen substituiert ist und/oder gegebenenfalls ein Heteroatom, das ausgewählt ist unter O und S, als Ringglied aufweist.

Anilide der Formel I und Verfahren zu ihrer Herstellung sind an sich bekannt und beispielsweise in der EP-A-545099, EP-A-589301 und WO 97/08952 sowie in der darin zitierten Literatur beschrieben.

Besonders bevorzugt ist das Anilid der Formel I ausgewählt unter Aniliden der Formel I.1 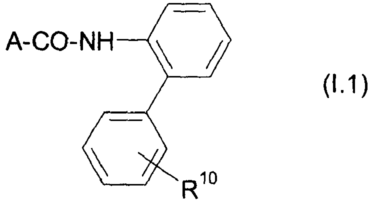 worin A für eine Gruppe der Formel A1 bis A8 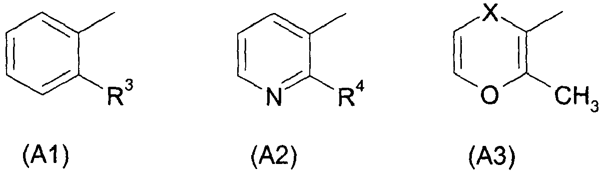 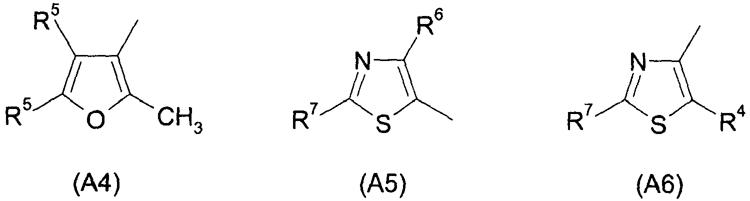 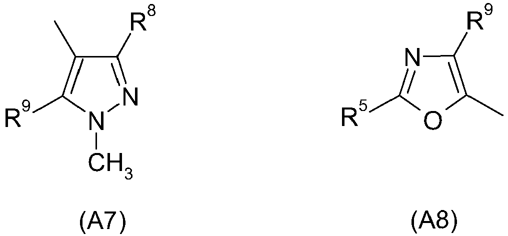 steht, worin
- X: für CH₂, S, SO oder SO₂ steht;
- R³: für CH₃, CHF₂, CF₃, Cl, Br oder I steht;
- R⁴: für CF₃ oder Cl steht;
- R⁵: für Wasserstoff oder CH₃ steht;
- R⁶: für CH₃, CHF₂, CF₃ oder Cl steht;
- R⁷: für Wasserstoff, CH₃ oder Cl steht;
- R⁸: für CH₃, CHF₂ oder CF₃ steht;
- R⁹: für Wasserstoff, CH₃, CHF₂, CF₃ oder Cl steht; und
- R¹⁰: für C₁-C₄-Alkyl, C₁-C₄-Alkoxy, C₁-C₄-Alkylthio oder Halogen steht.

Vorzugsweise steht dabei die Gruppe A für die Gruppe A2 worin R⁴ für Halogen steht, und wobei R¹⁰ für Halogen steht.

Insbesondere ist das Anilid-Fungizid der Formel I ausgewählt unter Aniliden der Formel I.1.1 und I.1.2

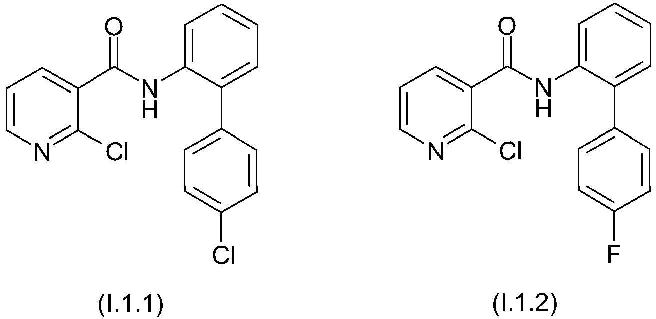

Hierunter ist das Anilid 1.1.1 besonders bevorzugt. Diese Verbindung ist auch unter dem Common Name Boscalid bekannt und kommerziell erhältlich.

Carbamat-Fungizide sind fungizid wirksame Verbindungen, die eine Carbamatgruppe (NRR'-CO-OR") enthalten.

Carbamat-Fungizide und Verfahren zu ihrer Herstellung sind dem Fachmann grundsätzlich bekannt und beispielsweise in Farm Chemicals Handbook, Meister Publishing Company oder im Compendium of Pesticide Common Names, http://www.hclrss.demon.co.uk/ beschrieben, worauf hiermit in vollem Umfang Bezug genommen wird.

Bevorzugte Carbamat-Fungizide sind solche, die unter den Common Names Benthiavalicarb, Furophanate, Iprovalicarb, Propamocarb, Thiophanate, Thiophanate-Methyl, Thiophanate-Ethyl, Benomyl, Carbendazim, Cypendazol, Debacarb und Mecarbinzid bekannt sind. Hierunter sind Carbendazim, Thiophanate, Thiophanate-Methyl und Thiophanate-Ethyl besonders bevorzugt. Insbesondere verwendet man Thiophanate-Methyl.

Dicarboximid-Fungizide sind fungizid wirksame Verbindungen, die eine Imidgruppe einer Dicarbonsäure enthalten. Dementsprechend enthalten diese Verbindungen eine cyclische Struktur mit einer -CO-NR-CO-Gruppe.

Dicarboximid-Fungizide und Verfahren zu ihrer Herstellung sind dem Fachmann grundsätzlich bekannt und beispielsweise in Farm Chemicals Handbook, Meister Publishing Company oder im Compendium of Pesticide Common Names, http://www.hclrss.demon.co.uk/ beschrieben, worauf hiermit in vollem Umfang Bezug genommen wird.

Bevorzugte Dicarboximide sind solche der Formel II 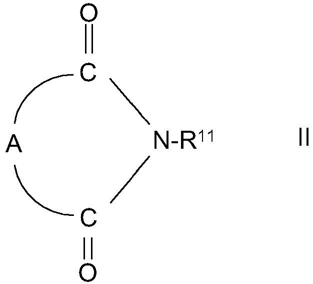 worin
- A: für -CR¹²R¹³-CR¹⁴R¹⁵-, -CR¹²R¹³-O-, -CR¹²R¹³-NR¹⁶- oder -CR¹²=CR¹⁴- steht,
- R¹¹: für C₁-C₈-Alkylthio, C₁-C₈-Haloalkylthio, C₁-C₈-Alkylthio-C₁-C₄-alkyl, C₁-C₈-Haloalkylthio-C₁-C₈-alkyl, Phenylthio, Phenylthio-C₁-C₄-alkyl, Phenyl, Phenylamino, wobei Phenyl in den vier zuletzt genannten Resten teilweise oder vollständig halogeniert sein kann und/oder 1 bis 3 Substituenten, die ausgewählt sind unter Halogen, C₁-C₈-Alkyl, C₁-C₈-Alkoxy, Phenyl und Phenoxy ausgewählt sind, tragen kann, Di-(C₁-C₈-Alkyl)-phosphonat oder Di-(C₁-C₈-alkyl)-thiophosphonat steht;
- R¹², R¹³, R¹⁴ und R¹⁵: unabhängig voneinander für Wasserstoff, Halogen, C₁-C₈-Alkyl, C₁-C₈-Haloalkyl, C₁-C₈-Alkoxy, C₁-C₈-Alkylthio, C₁-C₈-Haloalkoxy, C₁-C₈-Haloalkylthio, C₁-C₈-Alkoxy-C₁-C₈-alkyl, C₂-C₈-Alkenyl, C₂-C₈-Alkinyl, Carboxy (= COOH), C₁-C₈-Alkyloxycarbonyl, C₁-C₈-Alkylcarbonyl, C₁-C₈-Alkylcarbonyloxy, Phenyl, das teilweise oder vollständig halogeniert sein kann und/oder 1 bis 3 Substituenten, die ausgewählt sind unter Halogen, C₁-C₈-Alkyl, C₁-C₈-Alkoxy, Phenyl, Phenoxy, Benzyl und Benzyloxy tragen kann,
wobei
- R¹² und R¹⁴: auch gemeinsam mit den Kohlenstoffatomen, an die sie gebunden sind, einen 3- bis 6-gliedrigen gesättigten oder ungesättigten aromatischen oder nicht aromatischen Cyclus bilden können, der unsubstituiert oder durch 1 bis 3 Substituenten, die ausgewählt sind unter Halogen, C₁-C₈-Alkyl, C₁-C₈-Alkoxy, Phenyl, Phenoxy, Benzyl oder Benzoxy substituiert sein kann; und
- R¹⁶: für Wasserstoff, C₁-C₄-Alkyl, C₁-C₈-Alkylcarbonyl, C₁-C₈-Alkyloxycarbonyl oder C₁-C₈-Alkylaminocarbonyl oder Di-(C₁-C₈-alkyl)-aminocarbonyl steht.

Bevorzugte Dicarboximid-Fungizide sind solche, die unter den Common Names Famoxadone, Fluoroimide, Chlozolinate, Dichlozoline, Iprodione, Isovaledione, Myclozolin, Procymidone, Vinclozolin, Captafol, Captan, Ditalimfos, Folpet und Thiochlorfenphim bekannt sind. Besonders bevorzugt sind Iprodione, Vinclozolin, und Procymidone. Insbesondere verwendet man Iprodione.

Azol-Fungizide, die auch als Conazol-Fungizide bezeichnet werden, sind fungizid wirksame Verbindungen, die einen aromatischen 5-gliedrigen Stickstoff-Heterocyclus und insbesondere einen Imidazolring ("Imidazol-Conazole") oder einen Triazolring ("Triazol-Conazole") enthalten.

Azol-Fungizide und Verfahren zu ihrer Herstellung sind dem Fachmann grundsätzlich bekannt und beispielsweise in Farm Chemicals Handbook, Meister Publishing Company oder im Compendium of Pesticide Common Names, http://www.hclrss.demon.co.uk/ beschrieben, worauf hiermit in vollem Umfang Bezug genommen wird.

Bevorzugte Azol-Fungizide sind solche, die unter den Common Names Bitertanol, Bromoconazol, Cyproconazol, Difenoconazole, Dinitroconazol, Epoxiconazol, Fenbuconazol, Fluquiconazol, Flusilazol, Hexaconazol, Imazalil, Metconazol, Myclobutanil, Penconazol, Propiconazol, Prochloraz, Prothioconazol, Tebuconazol, Triadimefon, Triadimenol, Triflumizol und Triticonazol bekannt sind. Besonders bevorzugt sind Flusilazol, Metconazol, Prothioconazol und Tebuconazol. Stärker bevorzugt sind Flusilazol, Metconazol, Prothioconazol und Tebuconazol. Noch stärker bevorzugt sind Metconazol, Prothioconazol und Tebuconazol. Insbesondere verwendet man Metconazol.

Strobilurin-Fungizide sind fungizid wirksame Verbindungen, die sich von natürlichen Strobilurinen, Abwehrstoffen, die von Pilzen der Gattung Strobilurus (Zapfenrüblinge) produziert werden, ableiten. Strukturell enthalten sie 1.) wenigstens eine funktionelle Gruppe, die ausgewählt ist unter Enolethern, Oximethern und O-Alkyl-hydroxylaminen (Gruppe I) und 2.) wenigstens ein Carboxylderivat (Gruppe II). Bevorzugte Carboxylderivate sind folgende funktionelle Gruppen: Ester, cyclischer Ester, Amid, cyclisches Amid, Hydroxamsäure und cyclische Hydroxamsäure. Bevorzugt sind die Reste der Gruppe I und der Gruppe II direkt benachbart, d. h. durch eine Einfachbindung verbunden.

Strobilurin-Fungizide sind dem Fachmann grundsätzlich bekannt und beispielsweise in Farm Chemicals Handbook, Meister Publishing Company oder im Compendium of Pesticide Common Names, http://www.hclrss.demon.co.uk/ beschrieben, worauf hiermit in vollem Umfang Bezug genommen wird.

Bevorzugte Strobilurine sind solche der Formeln IIIA oder IIIB 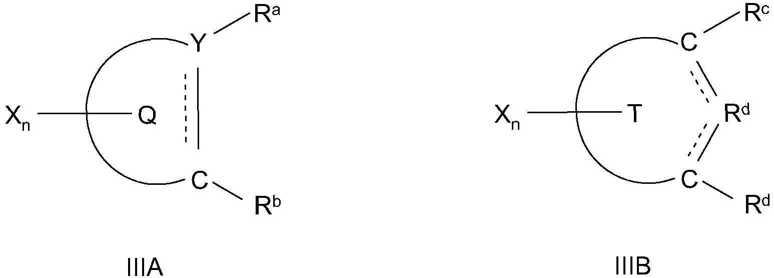 worin
- ...: für eine Doppelbindung oder Einfachbindung steht;
- R^{a}: für -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[CO₂CH₃]=NOCH₃, -C[COCH₂CH₃]=NOCH₃, -N(OCH₃)-CO₂CH₃, -N(CH₃)-CO₂CH₃ oder -N(CH₂CH₃)-CO₂CH₃ steht;
- R^{b}: für einen organischen Rest steht, der direkt oder über ein Sauerstoffatom, ein Schwefelatom, eine Amino- oder eine C₁-C₈-Alkylaminogruppe gebunden ist; oder
zusammen mit einer Gruppe X und dem Ring Q bzw. T, an den sie gebunden sind, eingegebenenfalls substituiertes bicyclisches, partiell oder vollständig ungesättigtes System, welches neben Kohlenstoffringgliedern 1, 2 oder 3 Heteroatome, unabhängig ausgewählt unter Sauerstoff, Schwefel und Stickstoff, enthalten kann;
- R^{c}: für -OC[CO₂CH₃]=CHOCH₃, -OC[CO₂CH₃]=CHCH₃, -OC[CO₂CH₃]=CHCH₂CH₃, -SC[CO₂CH₃]=CHOCH₃,-SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH3, -CH₂C[CO₂CH₃]=CHOCH₃, -CH₂C[CO₂CH₃]=NOCH₃ oder -CH₂C[CONHCH₃]=NOCH₃ steht;
- R^{d}: für Sauerstoff, Schwefel, =CH- oder =N- steht;
- n: für 0, 1, 2 oder 3 steht, wobei die Reste X gleich oder verschieden sein können, wenn n > 1 ist;
- X: für Cyano, Nitro, Halogen, C₁-C₈-Alkyl, C₁-C₈-Halogenalkyl, C₁-C₈-Alkoxy, C₁-C₈-Halogenalkoxy oder C₁-C₈-Alkylthio steht oder
wenn n > 1 ist, eine an zwei benachbarte C-Atome des Phenylrings gebundene C₃-C₅-Alkylen-, C₃-C₅-Alkenylen-, Oxy-C₂-C₄-alkylen-, Oxy-C₁-C₃-alkylenoxy-, Oxy-C₂-C₄-alkenylen-, Oxy-C₂-C₄-alkenylenoxy- oder Butadiendiylgruppe bedeutet, wobei diese Ketten ihrerseits ein bis drei Reste tragen können, die unabhängig voneinander ausgewählt sind unter Halogen, C₁-C₈-Alkyl, C₁-C₈-Halogenalkyl, C₁-C₈-Alkoxy, C₁-C₈-Halogenalkoxy und C₁-C₈-Alkylthio;
- Y: für =C- oder -N- steht;
- Q: für Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridonyl, Pyrimidinyl oder Triazinyl steht; und
- T: für Phenyl, Oxazolyl, Thiazolyl, Thiadiazolyl, Oxadiazolyl, Pyridinyl, Pyrimidinyl oder Triazinyl steht.

Bei dem Substituenten R^{b} handelt es sich dabei insbesondere um einen C₁-C₈-Alkyl-, C₂-C₈-Alkenyl-, C₂-C₈-Alkinyl-, Aryl-, Hetaryl-, Aryl-C₁-C₈-alkyl-, Hetaryl-C₁-C₈-alkyl-, Aryl-C₂-C₈-alkenyl-, Hetaryl-C₂-C₈-alkenyl-, Aryl-C₂-C₈-alkinyl- oder Hetaryl-C₂-C₈-alkinylrest, der ggf. von einer oder mehreren Gruppen unterbrochen ist, die ausgewählt sind unter O, S, SO, SO₂, NR (R = H oder C₁-C₈-Alkyl), CO, COO, OCO, CONH, NHCO und NHCONH oder um einen Rest der wie unten definierten Formeln CH₂ON=CR^{α}CR^{β} oder CH₂ON=CR^{γ}CR^{δ}=NOR^{ε}. Gegebenenfalls weisen diese Reste auch einen oder mehrere (vorzugsweise 1, 2 oder 3) Substituenten auf, die unabhängig voneinander ausgewählt sind unter C₁-C₈-Alkyl, C₁-C₈-Alkoxy, Halogen, Cyano, C₁-C₈-Halogenalkyl (insbesondere CF₃ und CHF₂), Hetaryl und Aryl. Hetaryl und Aryl können ihrerseits wieder 1, 2 oder 3 Substituenten aufweisen, die unabhängig voneinander ausgewählt sind unter Halogen, C₁-C₈-Halogenalkyl (insbesondere CF₃ und CHF₂), Phenyl, CN, Phenoxy, C₁-C₈-Alkyl, C₁-C₈-Alkoxy und C₁-C₈-Halogenalkoxy.

Derartige Verbindungen sind bekannt und beispielsweise in der WO 97/10716 sowie in der darin zitierten Literatur beschrieben, worauf hiermit in vollem Umfang Bezug genommen wird.

Bevorzugt sind Strobilurine der Formeln IIIA oder IIIB, worin R^{b} für Aryloxy, Hetaryloxy, Aryloxymethylen, Hetaryloxymethylen, Arylethenylen oder Hetarylethenylen steht, wobei diese Reste gegebenenfalls 1, 2 oder 3 Substituenten aufweisen, die unabhängig voneinander ausgewählt sind unter C₁-C₈-Alkyl, Halogen, CF₃, CHF₂, CN, C₁-C₈-Alkoxy und Phenyl, das seinerseits 1, 2 oder 3 Substituenten aufweisen kann, die unabhängig voneinander ausgewählt sind unter Halogen, CF₃, CHF₂, Phenyl, CN, Phenoxy, C₁-C₈-Alkyl, C₁-C₈-Alkoxy und C₁-C₈-Halogenalkoxy;
oder R^{b} für CH₂ON=CR^{α}R^{β} oder CH₂ON=CR^{γ}CR^{δ}=NOR^{ε} steht,
wobei
- R^{α}: für C₁-C₈-Alkyl steht;
- R^{β}: für Phenyl, Pyridyl oder Pyrimidyl steht, das gegebenenfalls 1, 2 oder 3 Substituenten aufweist, die unabhängig voneinander ausgewählt sind unter C₁-C₈-Alkyl, C₁-C₈-Alkoxy, Halogen, C₁-C₈-Halogenalkoxy, CF₃ und CHF₂;
- R^{γ}: für C₁-C₈-Alkyl, C₁-C₈-Alkoxy, Halogen, C₁-C₈-Halogenalkyl oder Wasserstoff steht;
- R⁸: für Wasserstoff, Cyano, Halogen, C₁-C₈-Alkyl, C₁-C₈-Alkoxy, C₁-C₈-Alkylthio, C₁-C₈-Alkylamino, Di-C₁-C₈-Alkylamino, C₂-C₈-Alkenyl, C₂-C₈-Alkenyloxy, C₂-C₈-Alkenylthio, C₂-C₈-Alkenylamino, N-C₂-C₈-ALkenyl-N-C₁-C₈-alkylamino, C₂-C₈-Alkinyl, C₂-C₈-Alkinyloxy, C₂-C₈-Alkinylthio, C₂-C₈-Alkinylamino, N-C₂-C₈-Alkinyl-N-C₁-C₈-alkylamino, wobei die Kohlenwasserstoffreste dieser Gruppen partiell oder vollständig halogeniert sein können und/ oder 1, 2 oder 3 Reste tragen können, die unabhängig ausgewählt sind unter Cyano, Nitro, Hydroxy, C₁-C₈-Alkoxy, C₁-C₈-Halogenalkoxy, C₁-C₈-Alkoxycarbonyl, C₁-C₈-Alkylthio, C₁-C₈-Alkylamino, Di-C₁-C₈-alkylamino, C₂-C₈-Alkenyloxy, C₃-C₈-Cycloalkyl, C₃-C₈-Cycloalkyloxy, Heterocyclyl, Heterocyclyloxy, Aryl, Aryloxy, Aryl-C₁-C₈-alkoxy, Hetaryl, Hetaryloxy und Hetaryl-C₁-C₈-alkoxy, wobei die cyclischen Reste ihrerseits partiell oder vollständig halogeniert sein können und/oder 1, 2 oder 3 Gruppen tragen können, die unabhängig ausgewählt sind unter Cyano, Nitro, Hydroxy, C₁-C₈-Alkyl, C₁-C₈-Halogenalkyl, C₃-C₈-Cycloalkyl, C₁-C₈-Alkoxy, C₁-C₈-Halogenalkoxy, C₁-C₈-Alkoxycarbonyl, C₁-C₈-Alkylthio, C₁-C₈-Alkylamino, Di-C₁-C₈-alkylamino, C₂-C₈-Alkenyl und C₂-C₈-Alkenyloxy;
oder
für C₃-C₈-Cycloalkyl, C₃-C₈-Cycloalkyloxy, C₃-C₈-Cycloalkylthio, C₃-C₈-Cycloalkylamino, N-C₃-C₈-Cycloalkyl-N-C₁-C₈-alkylamino, Heterocyclyl, Heterocyclyloxy, Heterocyclylthio, Heterocyclylamino, N-Heterocyclyl-N-C₁-C₈-alkylamino, Aryl, Aryloxy, Arylthio, Arylamino, N-Aryl-N-C₁-C₈-alkylamino, Hetaryl, Hetaryloxy, Hetarylthio, Hetarylamino oder N-Hetaryl-N-C₁-C₈-alkylamino steht, wobei die cyclischen Reste partiell oder vollständig halogeniert sein können und/oder 1, 2 oder 3 Gruppen tragen können, die unabhängig ausgewählt sind unter Cyano, Nitro, Hydroxy, C₁-C₈-Alkyl, C₁-C₈-Halogenalkyl, C₃-C₈-Cycloalkyl, C₁-C₈-Alkoxy, C₁-C₈-Halogenalkoxy, C₁-C₈-Alkoxycarbonyl, C₁-C₈-Alkylthio, C₁-C₈-Alkylamino, Di-C₁-C₈-alkylamino, C₂-C₈-Alkenyl, C₂-C₈-Alkenyloxy, Benzyl, Benzyloxy, Aryl, Aryloxy, Hetaryl und Hetaryloxy, wobei die aromatischen Reste ihrerseits partiell oder vollständig halogeniert sein können und/oder 1, 2 oder 3 der folgenden Gruppen tragen können: Cyano, C₁-C₈-Alkyl, C₁-C₈-Halogenalkyl, C₁-C₈-Alkoxy, Nitro;
R^{ε} für C₁-C₈-Alkyl, C₂-C₈-Alkenyl oder C₂-C₈-Alkinyl steht, wobei diese Gruppen partiell oder vollständig halogeniert ein können und/oder 1, 2 oder 3 der folgenden Reste tragen können: Cyano, C₁-C₈-Alkoxy, C₃-C₈-Cycloalkyl.

Besonders bevorzugt sind Verbindungen der Formel IIIA oder IIIB, worin R^{b} eine der folgenden Bedeutungen besitzt:
a) Phenyloxymethylen, Pyridinyloxymethylen, Pyrimidinyloxymethylen oder Pyrazolyloxymethylen, wobei der aromatische Rest gegebenenfalls 1, 2 oder 3 Substituenten aufweist, die unabhängig voneinander ausgewählt sind unter C₁-C₈-Alkyl, Halogen, CF₃, CHF₂, -C(CH₃)=NOCH₃, und Phenyl, das gegebenenfalls mit 1, 2 oder 3 Halogenatomen und/oder C₁-C₈-Alkylgruppen substituiert ist;
b) Phenoxy oder Pyrimidinyloxy, das gegebenenfalls mit 1, 2 oder 3 Halogenatomen oder einem Phenoxyrest, der gegebenenfalls einen Halogen- oder Cyanosubstituenten aufweist, substituiert ist;
c) Phenylethenylen oder Pyrazolylethenylen, wobei der Phenyl- oder Pyrazolylrest gegebenenfalls 1, 2 oder 3 Substituenten aufweist, die unabhängig voneinander ausgewählt sind unter Halogen, CF₃, CHF₂ und Phenyl.
d) CH₂ON=CR^{α}R^{β},
worin
- R^{α}: für C₁-C₈-Alkyl steht; und
- R^{β}: für Phenyl, das gegebenenfalls 1, 2 oder 3 Substituenten aufweist, die unabhängig voneinander ausgewählt sind unter C₁-C₈-Alkyl, Halogen, CF₃ und CHF₂, oder für Pyrimidinyl steht, das gegebenenfalls durch 1 oder 2 C₁-C₈-Alkoxyreste substituiert ist;
- e): CH₂ON=CR^{γ}CR^{δ}=NOR^{ε}, worin
- R^{γ}: für C₁-C₈-Alkyl, C₁-C₈-Alkoxy oder Halogen steht;
- R^{δ}: für C₁-C₈-Alkyl, Cyano, Halogen, C₁-C₈-Alkoxy, C₁-C₈-Alkenyl oder Phenyl, das gegebenenfalls durch 1, 2 oder 3 Halogenatome substituiert ist, steht; und
- R^{ε}: für C₁-C₈-Alkyl steht.

Insbesondere bevorzugt sind Verbindungen der Formel IIIA, worin Q für Phenyl steht und n für 0 steht.

Besonders bevorzugte Strobilurine sind solche, die unter den Common Names Azoxystrobin, Dimoxystrobin, Fluoxastrobin, Kresoxim-Methyl, Methaminostrobin, Orysastrobin, Picoxystrobin, Pyraclostrobin und Trifloxystrobin bekannt sind. Stärker bevorzugt sind Pyraclostrobin, Azoxystrobin und Dimoxystrobin. Noch stärker bevorzugt sind Azoxystrobin und Dimoxystrobin und insbesondere Dimoxystrobin.

Morpholin-Fungizide sind fungizid wirksame Verbindungen, die eine Morpholingruppe 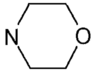 enthalten.

Morpholin-Fungizide und Verfahren zu ihrer Herstellung sind dem Fachmann grundsätzlich bekannt und beispielsweise in Farm Chemicals Handbook, Meister Publishing Company oder im Compendium of Pesticide Common Names, http://www.hclrss.demon.co.uk/ beschrieben, worauf hiermit in vollem Umfang Bezug genommen wird.

Bevorzugte Morpholin-Fungizide sind solche, die unter den Common Names Aldimorph, Benzamorf, Carbamorph, Dimethomorph, Dodemorph, Fenpropimorph, Flumorph und Tridemorph bekannt sind. Hierunter ist Dimethomorph besonders bevorzugt.

Erfindungsgemäß können auch zwei oder mehrere der oben genannten Fungizide, die aus der gleichen Klasse oder aus verschiedenen Fungizidklassen ausgewählt sind, kombiniert eingesetzt werden. Die kombinierte Anwendung (im Rahmen der vorliegenden Erfindung als auch Kombination zweier oder mehrerer Fungizide bezeichnet) umfasst sowohl den Einsatz von Gemischen verschiedener Fungizide als auch deren getrennten Einsatz, wobei die Fungizide in diesem Fall sowohl gleichzeitig als auch sukzessive, d.h. in einem zeitlichen Abstand von beispielsweise wenigen Sekunden bis mehreren Monaten, zur Anwendung kommen können.

Bevorzugt sind die erfindungsgemäß einzusetzenden Fungizide ausgewählt unter Aryl- und/oder Heterocyclylaniliden, Strobilurinen und Azolen. Bezüglich geeigneter und bevorzugter Vertreter dieser Fungizidklassen wird auf die vorstehenden Ausführungen verwiesen. Bevorzugt ist auch die kombinierte Verwendung wenigstens zweier Vertreter dieser Fungizidklassen.

In einer bevorzugten Ausführungsform der Erfindung verwendet man wenigstens ein Aryl- und/oder Heterocyclylanilid als Fungizid. Bezüglich geeigneter und bevorzugter Anilide wird auf die vorstehenden Ausführungen verwiesen. Insbesondere verwendet man Boscalid als Anilid-Fungizid.

In einer alternativ bevorzugten Ausführungsform der Erfindung verwendet man wenigstens ein Azol als Fungizid. Bezüglich geeigneter und bevorzugter Azole wird auf die vorstehenden Ausführungen verwiesen. Bevorzugt verwendet man Metconazol, Prothioconazol oder Tebuconazol oder deren Kombination als Azol-Fungizid. Insbesondere verwendet man Metconazol als Azol-Fungizid.

In einer alternativ bevorzugten Ausführungsform der Erfindung verwendet man wenigstens ein Strobilurin als Fungizid. Bezüglich geeigneter und bevorzugter Strobilurine wird auf die vorstehenden Ausführungen verwiesen. Bevorzugt verwendet man Azoxystrobin oder Dimoxystrobin oder deren Kombination als Strobilurin-Fungizid. Insbesondere verwendet man Dimoxystrobin als Strobilurin-Fungizid.

In einer alternativ bevorzugten Ausführungsform der Erfindung verwendet man wenigstens ein Aryl- oder Heterocyclylanilid-Fungizid in Kombination mit wenigstens einem Azol-Fungizid. Bevorzugtes Anilid-Fungizid ist dabei Boscalid. Bevorzugtes Azol-Fungizid ist Metconazol.

In einer alternativ bevorzugten Ausführungsform der Erfindung verwendet man wenigstens ein Aryl- oder Heterocyclylanilid-Fungizid in Kombination mit wenigstens einem Strobilurin-Fungizid. Bevorzugtes Anilid-Fungizid ist dabei Boscalid. Bevorzugtes Strobilurin-Fungizid ist Dimoxystrobin.

Speziell verwendet man wenigstens ein Aryl- oder Heterocyclylanilid als Fungizid, vor allem Boscalid, gegebenenfalls in Kombination mit wenigstens einem Azol-Fungizid, vor allem mit Metconazol, oder gegebenenfalls in Kombination mit wenigstens einem Strobilurin-Fungizid, vor allem mit Dimoxystrobin, oder man verwendet wenigstens ein Azol-Fungizid, vor allem Metconazol.

Die Verwendung der erfindungsgemäß eingesetzten Fungizide zur Erhöhung der Qualität und gegebenenfalls der Quantität von Rapserzeugnissen bzw. zur Verringerung der Sprödigkeit der Samenschalen von Raps erfolgt allgemein in der Weise, dass die Rapspflanzen oder Pflanzenteile davon bzw. das Saatgut der Rapspflanzen mit diesen Verbindungen behandelt werden. Die Behandlung der Rapspflanzen bzw. des Saatgutes erfolgt vorzugsweise so, dass die Rapspflanze oder Pflanzenteile davon bzw. das Saatgut mit wenigstens einem der erfindungsgemäß eingesetzten Fungizide in Kontakt gebracht wird. Hierfür wird wenigstens ein Fungizid auf die Pflanze oder auf Pflanzenteile davon bzw. auf das Saatgut appliziert. Werden mehrere erfindungsgemäß eingesetzte Fungizide kombiniert, so können sie im Gemisch oder getrennt appliziert werden. Bei der getrennten Anwendung kann die Applikation der einzelnen Wirksubstanzen gleichzeitig oder - innerhalb einer Behandlungsfolge - gestaffelt nacheinander erfolgen, wobei sie bei der sukzessiven Applikation in einem zeitlichen Abstand von wenigen Sekunden oder wenigen Minuten bis mehreren Wochen oder sogar von einigen Monaten, z.B. von bis zu 10 Monaten, erfolgen kann. Auch kann ein einzelner Wirkstoff mehrfach appliziert werden, beispielsweise in einem zeitlichen Abstand der einzelnen Applikationen von wenigen Sekunden oder wenigen Minuten bis mehreren Wochen oder sogar von einigen Monaten, z.B. von bis zu 10 Monaten.

Die Anwendungstermine, die Anzahl der Applikationen und die speziell eingesetzten Aufwandmengen sind dabei an die jeweiligen Bedingungen anzupassen und müssen im Einzelfall vom Fachmann festgelegt werden. Neben den jeweils verwendeten Wirkstoffen muss dabei insbesondere unterschieden werden, ob eine Behandlung auf intakte Pflanzen unter Feldbedingungen erfolgt oder ob Saatgut behandelt werden soll.

Die Wirkstoffe können als solche oder in Form ihrer Formulierungen bzw. in Form der daraus bereiteten Anwendungsformen durch Spritzen, Versprühen, Vernebeln, Verstäuben, Verstreuen oder Gießen angewendet werden. Die Anwendungsformen richten sich ganz nach den Verwendungszwecken, v. a. nach der Pflanzenart und -sorte bzw. nach dem Pflanzenteil oder Pflanzenprodukt, auf den appliziert werden soll; sie sollten in jedem Fall möglichst die feinste Verteilung der erfindungsgemäß eingesetzten Wirkstoffe und auch der Hilfsstoffe gewährleisten.

Die erfindungsgemäß verwendeten Fungizide werden typischerweise als Formulierungen eingesetzt, wie sie im Bereich des Pflanzen- und Vorratsschutzes üblich sind.

Übliche Formulierungen sind beispielsweise Lösungen, Emulsionen, Suspensionen, Dispersionen, Pasten, Stäubmittel, Streumittel, Pulver und Granulate.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im Wesentlichen in Betracht:
- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden.
- Trägerstoffe wie natürliche Gesteinsmehle (z.B. Kaoline, Tonerden, Talkum, Kreide) und synthetische Gesteinsmehle (z.B. hochdisperse Kieselsäure, Silikate).
- Oberflächenaktive Stoffe, wie Alkali-, Erdalkali-, Ammoniumsalze von aromatischen Sulfonsäuren, z.B. Ligninsulfonsäure, Phenolsulfonsäure, Naphthalinsulfonsäure und Dibutylnaphthalinsulfonsäure, sowie von Fettsäuren, Alkylarylsulfonate, Alkylsulfate, Alkylsulfonate, Fettalkoholsulfate, Fettsäuren und sulfatierte Fettalkoholglykolether, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol oder Nonylphenol, Alkylphenylpolyglykolether, Tributylphenylpolyglykolether, Tristearylphenylpolyglykolether, Alkylarylpolyetheralkohole, Isotridecylalkohol, Alkohol- und Fettalkoholethylenoxid-Kondensate, ethoxyliertes Rizinusöl, Polyoxyethylen- oder Polyoxypropylenalkylether, ethoxyliertes Polyoxypropylen, Laurylalkoholpolyglykoletheracetat, Sorbitester, Ligninsulfitablaugen, Methylcellulose oder Siloxane. Geeignete Siloxane sind beispielsweise Polyetherpolymethylsiloxan-Copolymere, die auch als "Spreader" oder "Penetratoren" bezeichnet werden.

Als inerte Formulierungshilfsmittel, insbesondere zur Herstellung von direkt versprühbaren Lösungen, Emulsionen, Pasten oder Öldispersionen, kommen im Wesentlichen in Betracht: Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylole, Paraffine, Tetrahydronaphthalin, alkylierte Naphthaline oder deren Derivate, Alkohole, wie Methanol, Ethanol, Propanol, Butanol und Cyclohexanol, Ketone wie Cyclohexanon und Isophoron, stark polare Lösungsmittel, z.B. Dimethylsulfoxid, N-Methylpyrrolidon oder Wasser.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden.

Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im Allgemeinen die erfindungsgemäß eingesetzten Fungizide in einer Gesamtmenge von 0,01 bis 95 Gew.-%, vorzugsweise von 0,1 bis 90 Gew.-%, bezogen auf das Gesamtgewicht der Formulierung.

Produkte (Formulierungen) zur Verdünnung in Wasser sind beispielsweise wasserlösliche Konzentrate (SL), dispergierbare Konzentrate (DC), emulgierbare Konzentrate (EC), Emulsionen (EW, EO), Suspensionen (SC, OD, SE), wasserdispergierbare und wasserlösliche Granulate (WG, SG) sowie wasserdispergierbare und wasserlösliche Pulver (WP, SP). Produkte (Formulierungen) für die Direktapplikation sind beispielsweise Stäube (DP), Granulate (GR, FG, GG, MG) und ULV- Lösungen (UL).

Wässrige Anwendungsformen können aus Lagerformulierungen, wie konzentrierten Lösungen, Emulsionskonzentraten, Suspensionen, Pasten, netzbaren Pulvern (Spritzpulver, Öldispersionen) oder wasserdispergierbaren Granulaten, durch Zusatz von Wasser bereitet werden und beispielsweise durch Versprühen appliziert werden.

Zur Herstellung von Emulsionen, Pasten oder Öldispersionen können die erfindungsgemäß eingesetzten Fungizide als solche oder in einem Öl oder Lösungsmittel gelöst und mittels Netz-, Haft-, Dispergier- oder Emulgiermittel in Wasser homogenisiert werden. Es können aber auch aus der Wirksubstanz Netz-, Haft-, Dispergier- oder Emulgiermittel und eventuell Lösungsmittel oder Öl bestehende Konzentrate hergestellt werden, die zur Verdünnung mit Wasser geeignet sind. Es versteht sich von selbst, dass die Anwendungsformen die in den Lagerformulierungen verwendeten Hilfsstoffe enthalten.

Die Wirkstoffkonzentrationen in mit Wasser verdünnten Zubereitungen können in größeren Bereichen variiert werden. Im allgemeinen liegen sie zwischen 0,0001 und 10 Gew.-%, vorzugsweise zwischen 0,01 und 1 Gew.-%.

Den Wirkstoffen können Öle verschiedenen Typs, Netzmittel, Safener, Adjuvants, andere Fungizide, Insektizide, Bakterizide, Wachstumsregulatoren oder auch Blattdünger, die z.B. Spurenelemente und/oder Oligoelemente enthalten, gegebenenfalls auch erst unmittelbar vor der Anwendung (Tankmix), zugesetzt werden. Diese Mittel können auch separat zu den erfindungsgemäß eingesetzten Fungiziden appliziert werden, wobei die separate Applikation vor, gleichzeitig mit oder nach der Applikation der Fungizide erfolgen kann. Diese Mittel können zu den erfindungsgemäß eingesetzten Fungiziden im Gewichtsverhältnis 1:200 bis 200:1, vorzugsweise 1:100 bis 100:1, zugemischt werden.

Die kombinierte Verwendung der erfindungsgemäß eingesetzten Fungizide mit weiteren im Pflanzenschutz üblichen Wirkstoffen, z.B. mit anderen Fungiziden, kann sowohl dadurch erfolgen, dass man ein Gemisch dieser Wirkstoffe einsetzt (z.B. eine gemeinsame Formulierung oder ein Tankmix) als auch durch die getrennte, gleichzeitige oder sukzessive Applikation der einzelnen Wirkstoffe.

Wenn die erfindungsgemäß verwendeten Fungizide in Kombination mit wenigstens einem der oben genannten Mittel zum Einsatz kommen, so ist insbesondere ihre Verwendung in Kombination mit wenigstens einem davon verschiedenen Fungizid geeignet.

Die folgende Liste von Fungiziden, mit denen die erfindungsgemäß zum Einsatz kommenden Fungizide gemeinsam angewendet werden können, soll die Kombinationsmöglichkeiten erläutern, nicht aber einschränken:
- Acylalanine wie Benalaxyl, Metalaxyl, Ofurace, Oxadixyl,
- Aminderivate wie Aldimorph, Dodine, Dodemorph, Fenpropimorph, Fenpropidin, Guazatine, Iminoctadine, Spiroxamin, Tridemorph,
- Anilinopyrimidine wie Pyrimethanil, Mepanipyrim oder Cyprodinil,
- Antibiotika wie Cycloheximid, Griseofulvin, Kasugamycin, Natamycin, Polyoxin oder Streptomycin,
- Dithiocarbamate wie Ferbam, Nabam, Maneb, Mancozeb, Metam, Metiram, Propineb, Polycarbamat, Thiram, Ziram, Zineb,
- Heterocylische Verbindungen wie Anilazin, Cyazofamid, Dazomet, Dithianon, Fenamidon, Fenarimol, Fuberidazol, Isoprothiolan, Nuarimol, Probenazol, Proquinazid, Pyrifenox, Pyroquilon, Quinoxyfen, Silthiofam, Thiabendazol, Tricyclazol, Triforine,
- Kupferfungizide wie Bordeaux Brühe, Kupferacetat, Kupferoxychlorid, basisches Kupfersulfat,
- Nitrophenylderivate, wie Binapacryl, Dinocap, Dinobuton, Nitrophthal-isopropyl,
- Phenylpyrrole wie Fenpiclonil oder Fludioxonil,
- Schwefel,
- Sonstige Fungizide wie Acibenzolar-S-methyl, Carpropamid, Chlorothalonil, Cyflufenamid, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Hexachlorbenzol, Metrafenon, Pencycuron, Phthalid, Toloclofosmethyl, Quintozene, Zoxamid,
- Zimtsäureamide und Analoge wie Dimethomorph, Flumetover oder Flumorph. Bevorzugt werden die erfindungsgemäß eingesetzten Fungizide auf die Rapspflanze oder auf Teile davon appliziert. Es versteht sich von selbst, dass die Behandlung an einer lebenden Pflanze, d.h. während der Vegetationsphase der Pflanze, erfolgt. Bevorzugt wird auf den oberirdischen Teil der Pflanze appliziert.

In einer bevorzugten Ausführungsform für Feldapplikationen, d.h. Applikation auf wachsende Pflanzen oder Pflanzenteile davon, verwendet man die erfindungsgemäß eingesetzten Fungizide in Form einer wässrigen Spritzbrühe. Die Applikation erfolgt vorzugsweise durch Spritzen. Dabei wird entweder auf den gesamten oberirdischen Pflanzenteil oder aber nur auf einzelne Pflanzenteile, wie Blüten, Früchte, Blätter oder einzelne Triebe, appliziert. Die Wahl der einzelnen Pflanzenteile, auf die appliziert werden soll, hängt von der Pflanzenart und ihrem Entwicklungsstadium ab. Bevorzugt wird auf den gesamten oberirdischen Pflanzenteil appliziert.

Allgemein werden die erfindungsgemäß eingesetzten Fungizide bei der Feldapplikation in einer Menge von 5 bis 3000 g Einzelwirkstoff pro ha pro Saison, vorzugsweise 10 bis 1000, besonders bevorzugt 50 bis 500 g Einzelwirkstoff pro ha pro Saison eingesetzt.

Pro Saison werden die erfindungsgemäß eingesetzten Fungizide vorzugsweise 1 bis 5 Mal, besonders bevorzugt 1 bis 3 Mal und insbesondere 1 oder 2 Mal appliziert.

Bei Saatgut verwendet man die erfindungsgemäß eingesetzten Fungizide in einer für diese Anwendung üblichen Formulierung.

Allgemein werden die erfindungsgemäß eingesetzten Fungizide bei der Applikation bei Saatgut in einer Menge von 0,01 g bis 500 g, vorzugsweise 0,5 g bis 200 g Einzelwirkstoff pro kg Saatgut eingesetzt.

Ein weiterer Gegenstand der vorliegenden Erfindung ist ein Verfahren zur Erhöhung der Qualität und gegebenenfalls der Quantität von Rapserzeugnissen, umfassend die Behandlung einer Rapspflanze oder von Pflanzenteilen davon während der Vegetationsphase der Pflanze oder deren Saatgut mit wenigstens einem der vorstehend genannten Fungizide und die Gewinnung der Rapserzeugnisse.

Die Erhöhung der Qualität und gegebenenfalls der Quantität von Rapserzeugnissen ist wie oben definiert.

Unter der Vegetationsphase der Pflanze versteht man die Zeitspanne vom Auflaufen bis zur Ernte.

Bezüglich geeigneter und bevorzugter Rapspflanzen, Rapserzeugnisse und Fungizide sowie der Menge und Art, wie diese eingesetzt werden, wird auf das Vorstehende verwiesen.

Bevorzugt ist die Behandlung der Rapspflanze oder von Pflanzenteile davon während der Vegetationsphase der Pflanze. Dabei erfolgt die Behandlung der Rapspflanze vorzugsweise wenigstens teilweise während der Blütephase, d.h. wenigstens ein Fungizid wird während der Blütephase appliziert und gegebenenfalls wird dasselbe oder ein davon verschiedenes Fungizid während einer anderen Vegetationsperiode angewendet. Werden mehrere erfindungsgemäß einzusetzende Fungizide kombiniert, so ist es bevorzugt, ein Fungizid während der Blütephase einzusetzen und das oder die anderen Fungizide vor der Blütephase, z.B. im Frühjahr und/oder im Herbst. Werden beispielsweise Anilid-Fungizide mit Azol-Fungiziden kombiniert, so ist es bevorzugt, das oder die Anilid-Fungizide in der Blütephase und das oder die Azol-Fungizide davor, z.B. im Frühjahr und/oder im Herbst zu applizieren.

Die Gewinnung von Öl aus den ölliefernden Teilen der Rapspflanze, nämlich aus den Samen und/oder Früchten der Rapspflanze erfolgt nach den für die jeweilige Pflanze bzw. das jeweilige Pflanzenprodukt üblichen Verfahren, beispielsweise durch Pressen und/oder Extrahieren. Die bei den einzelnen Pflanzen bzw. deren Pflanzenprodukten jeweils erforderlichen Vor- oder Nachbehandlungsmaßnahmen sind dem Fachmann hinreichend bekannt.

Bei der Gewinnung des Öls im Pressverfahren fällt als Rückstand der sogenannte Presskuchen an. Dieser kann weiterverwendet werden, z.B. als Futtermittel oder als Brennstoff.

Die erfindungsgemäße Verwendung der oben beschriebenen Fungizide bzw. das erfindungsgemäße Verfahren führen vorzugsweise zu einer Erniedrigung des Phosphorgehalts der Erzeugnisse der behandelten Pflanzen, insbesondere des aus den Rapspflanzen gewonnenen Öls und/oder der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung des Alkali- und/oder Erdalkalimetallgehalts, vor allem des Erdalkalimetallgehalts und speziell des Calcium- und Magnesiumgehalts der Rapserzeugnisse, und zwar des aus Raps gewonnenen Öls und/oder der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung des Säuregehalts (gemessen als Säurezahl) der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung der lodzahl der Rapserzeugnisse, und zwar des aus Raps gewonnenen Öls und/oder der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erhöhung der Oxidationsstabilität der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung der Gesamtverschmutzung der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung der kinematischen Viskosität der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung des Schwefelgehaltes der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erhöhung des Flammpunkts der Rapserzeugnisse, und zwar des aus Raps gewonnenen Öls und gegebenenfalls der Umsetzungsprodukte davon, z.B. dessen C₁-C₄-Alkylester. Alternativ oder zusätzlich führen die erfindungsgemäße Verwendung der oben beschriebenen Fungizide bzw. das erfindungsgemäße Verfahren zu einer Erhöhung des Heizwertes der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung des Koksrückstandes der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erhöhung der Cetanzahl der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung des Stickstoffgehalts der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung des Chlorgehalts der Rapserzeugnisse, und zwar des aus Raps gewonnenen Öls und gegebenenfalls der Umsetzungsprodukte davon, z.B. dessen C₁-C₄-Alkylester.

Alternativ oder zusätzlich führen die erfindungsgemäße Verwendung der oben beschriebenen Fungizide bzw. das erfindungsgemäße Verfahren zu einer Erniedrigung des Gehalts an Zinn, Zink, Silicium und/oder Bor der Rapserzeugnisse, und zwar des aus Raps gewonnenen Öls und gegebenenfalls der Umsetzungsprodukte davon, z.B. dessen C₁-C₄-Alkylester.

Besonders bevorzugt führt die erfindungsgemäße Verwendung der oben beschriebenen Fungizide bzw. das erfindungsgemäße Verfahren zu einer Verbesserung der unter (i) bis (ix) und (xi), stärker bevorzugt (i) bis (viii) und insbesondere (i) bis (vii) aufgeführten Eigenschaften der Rapserzeugnisse, und zwar des aus Raps gewonnenen Öls und gegebenenfalls der Umsetzungsprodukte davon, z.B. dessen C₁-C₄-Alkylester.

Besonders bevorzugt führt die erfindungsgemäße Verwendung der oben beschriebenen Fungizide bzw. das erfindungsgemäße Verfahren zu einer Erniedrigung des Phosphorgehalts und/oder des Alkali- und/oder Erdalkalimetallgehalts, insbesondere zu einer Erniedrigung des Phosphorgehalts der Rapserzeugnisse, und zwar des aus Raps gewonnenen Öls und/oder der Umsetzungsprodukte davon, z.B. dessen C₁-C₄-Alkylester. Dementsprechend dient das erfindungsgemäße Verfahren besonders bevorzugt zur Herstellung von Rapserzeugnissen insbesondere von Rapsöl und/oder Umsetzungsprodukten davon, z.B. dessen C₁-C₄-Alkylester, mit einem verringerten Phosphorgehalt und/oder Alkali- und/oder Erdalkalimetallgehalt und insbesondere mit einem verringerten Phosphorgehalt.

Der Säuregehalt der Ölpflanzenerzeugnisse, vor allem des Öls und gegebenenfalls der Umsetzungsprodukte davon kann z.B. gemäß DIN EN 14104 (als Säurezahl) bestimmt werden. Die Oxidationsstabilität kann gemäß DIN EN 14112 gemessen werden. Die Bestimmung des Phosphorgehalts kann gemäß DIN EN 14107 erfolgen und des Alkali-(v.a. Na und K) und Erdalkalimetallgehalts (Calcium und Magnesium) gemäß DIN EN 14538. Die Bestimmung der Iodzahl kann gemäß EN 14111 erfolgen. Die Gesamtverschmutzung kann z.B. gemäß EN 12662 gemessen werden. Die kinematische Viskosität kann z.B. gemäß EN ISO 3104 bestimmt werden. Der Flammpunkt kann gemäß EN ISO 2719, der untere Heizwert gemäß DIN 51900-1 und -3, der Koksrückstand nach Conradson gemäß EN ISO 10370 und die Cetanzahl gemäß DIN 51773 bestimmt werden. Die Bestimmung des Schwefelgehalts kann gemäß EN ISO 20884 erfolgen und die des Chlorgehalts gemäß DIN 51577-3. Zinn-, Zink- und Siliciumgehalte können gemäß DIN 51396-1 gemessen werden und der Borgehalt gemäß DIN 51443-2.

Die im Rahmen der vorliegenden Erfindung verwendeten Begriffe "Phosphorgehalt", "Alkalimetallgehalt", "Erdalkalimetallgehalt", "Säuregehalt/Säurezahl", "Iodzahl", "Oxidationsstabilität", "Gesamtverschmutzung", "kinematische Viskositöt", "Flammpunkt", "unterer Heizwert", "Koksrückstand", "Cetanzahl", "Schwefelgehalt", "Chlorgehalt" sowie "Zink-, Zinn-, Silicium- und Borgehalt" sind vorzugsweise wie in den dazugehörigen Normen zur Bestimmung ihrer Größe definiert.

Die Erhöhung der Qualität der Ölpflanzenerzeugnisse, die sich z.B. in einer Verringerung des Phosphorgehalts, und/oder des Alkalimetallgehalts und/oder Erdalkalimetallgehalts und/oder des Säuregehalts und/oder in der Erhöhung der Oxidationsstabilität etc. äußert, ist vermutlich zumindest teilweise auf eine systemische Wirkung der erfindungsgemäß eingesetzten Fungizide zurückzuführen, die bewirkt, dass z.B. der Phosphorgehalt und/oder der Alkalimetall-/Erdalkalimetallgehalt und/oder der Säuregehalt und/oder der Gehalt an ungesättigten Fettsäuren der ölhaltigen Pflanzenprodukte, d.h. der Früchte, Samen und/oder Nüsse, verringert wird und/oder der Gehalt an natürlichen Antioxidantien zunimmt. Damit sinkt auch der Phosphorgehalt, der Alkalimetall-/Erdalkalimetallgehalt und/oder der Säuregehalt etc. des daraus gewonnenen Öls und Presskuchens und der Umsetzungsprodukte des Öls und/oder die Oxidationsstabilität nimmt zu.

Die Verringerung des Gehalts an Phosphorverbindungen und/oder an Alkali- und vor allem Erdalkalimetallverbindungen, aber auch an Schwebeteilchen (die als Gesamtverschmutzung bestimmt werden) und anderen unerwünschten Komponenten ist insbesondere bei Samenölpflanzen unter anderem vermutlich auch darauf zurückzuführen, dass der erfindungsgemäße Einsatz von Fungiziden zu einer verringerten Sprödigkeit der Samenschalen von Raps führt. Dies führt wiederum dazu, dass beim Pressen zur Gewinnung des Öls die Samenschalen weniger leicht brechen und verrieben werden, so dass weniger Inhaltsstoffe der Samenschale extrahiert werden. Die verringerte Sprödigkeit, d.h. die erhöhte Elastizität der Samenschale erlaubt die Anwendung von geringeren Drücken beim Pressen der ölhaltigen Pflanzenprodukte, was ebenfalls zu einer verringerten Extraktion unerwünschter Komponenten aus der Samenschale führt. Umgekehrt kann bei Anwendung eines höheren Pressdrucks und/oder einer höheren Presstemperatur ein bestimmter Grenzwert für die Qualität des Öls (z.B. der Phosphor-Grenzwert) eingehalten werden, während die Ölausbeute aufgrund der schärferen Pressbedingungen signifikant gesteigert werden kann. Das heißt, der Einsatz der oben beschriebenen Fungizide führt speziell bei Öl sowohl zu einer Qualitäts- als auch zu einer Quantitätssteigerung.

Ein weiterer Gegenstand der Erfindung ist ein Verfahren zur Verringerung der Sprödigkeit der Samenschalen von Raps, bei dem man Rapspflanzen oder Pflanzenteile davon während der Vegetationsphase der Pflanze oder deren Saatgut mit wenigstens einem der vorstehend genannten Fungizide behandelt.

Auch hier wird bezüglich geeigneter und bevorzugter Rapspflanzen und Fungizide sowie der Art und Menge, wie diese eingesetzt werden, auf das Vorstehende verwiesen. Bevorzugt ist die Behandlung von Raps oder von Pflanzenteilen davon während der Vegetationsphase der Pflanze. Bezüglich bevorzugter Behandlungszeitpunkte wird auf die vorstehenden Ausführungen verwiesen.

Gegenstand der Erfindung sind auch Rapssamen, die aus erfindungsgemäß behandelten Rapspflanzen erhältlich sind. Diese zeichnen sich im Vergleich zu Samen, die aus Rapspflanzen gewonnen werden, die nicht erfindungsgemäß behandelt wurden, vorzugsweise durch eine verringerte Sprödigkeit der Samenschale aus. Außerdem zeichnen sie sich vorzugsweise dadurch aus, dass das aus ihnen gewonnene Öl und dessen Umsetzungsprodukte wenigstens eine der unter (i) bis (viii), (ix), (xi) oder (xii) aufgeführten verbesserten Eigenschaften besitzen und vorzugsweise eine verringerte Säurezahl und/oder eine erhöhte Oxidationsstabilität besitzen. Alternativ oder zusätzlich zeichnen sie sich vorzugsweise durch einen verringerten Phosphorgehalt und/oder einen verringerte Alkali- und/oder vor allem Erdalkaligehalt aus.

Gegenstand der vorliegenden Erfindung ist ferner ein Rapserzeugnis, das durch das erfindungsgemäße Verfahren erhältlich ist. Dieses zeichnet sich unter anderem durch wenigstens eine der unter (i) bis (viii), (ix), (xi) oder (xii) aufgeführten Eigenschaften aus, vorzugsweise durch einen verringerten Phosphorgehalt und/oder einen verringerten Gehalt an Alkali- und vor allem Erdalkalimetallverbindungen. Zusätzlich oder alternativ zeichnet es sich vorzugsweise durch einen verringerten Säuregehalt und/oder eine erhöhte Oxidationsstabilität aus.

Vorzugsweise sind die Rapserzeugnisse ausgewählt unter den ölhaltigen Früchten und Samen von Raps, dem daraus gewonnenen Öl, dem Presskuchen, der bei der Ölgewinnung im Pressverfahren anfällt, und den Umsetzungsprodukten des Öls, z.B. seinen Umesterungsprodukten mit C₁-C₄-Alkoholen.

Ölhaltige Früchte können einerseits als Lebensmittel oder Futtermittel zum Einsatz kommen. Andererseits können sie zur Gewinnung von Öl eingesetzt werden. Vorzugsweise werden sie zur Gewinnung von Öl eingesetzt.

Bei den ölhaltigen Samen handelt es sich um die Samen von Raps. Die ölhaltigen Samen von Raps können einerseits als Lebensmittel oder Futtermittel zum Einsatz kommen. Andererseits können sie zur Gewinnung von Öl eingesetzt werden. Auch für einen direkten Einsatz zur Energiegewinnung, d.h. als Brennstoff, vor allem in

Feuerungsanlagen, sind sie geeignet. Vorzugsweise werden sie zur Gewinnung von Öl oder zur direkten Energiegewinnung, d.h. als Brennstoff, und insbesondere zur Gewinnung von Öl eingesetzt.

Wie bereits gesagt, zeichnen sich die erfindungsgemäßen Samen im Vergleich zu Samen, die aus Raps gewonnen werden, die nicht behandelt wurden, unter anderem durch einen verringerten Phosphorgehalt und/oder einen verringerten Alkali- und vor allem Erdalkalimetallgehalt sowie eine verringerte Sprödigkeit der Samenschale und insbesondere durch einen verringerten Phosphorgehalt sowie eine verringerte Sprödigkeit der Samenschale aus. Insbesondere weist das aus den Samen gewonnene Öl (und dessen Umsetzungsprodukte) eine erhöhte Oxidationsstabilität und/oder eine erniedrigte Säurezahl und/oder einen erniedrigten Phosphorgehalt und/oder einen erniedrigten Alkali- und/oder Erdalkalimetallgehalt im Vergleich zu Ölen auf, die aus nicht erfindungsgemäß behandelten Pflanzen gewonnen wurden. Zusätzlich oder alternativ zeichnet sich das erfindungsgemäß gewonnene Öl durch wenigstens eine unter (iv), (v), (vii), (viii), (ix), (xi) und (xii) aufgeführte Eigenschaft aus, beispielsweise durch eine niedrigere Iodzahl, niedrigere kinematische Viskosität und/oder geringere Gesamtverschmutzung etc. (im Vergleich zu Ölen, die aus nicht erfindungsgemäß behandelten Pflanzen gewonnen wurden).

Das aus den Früchten und/oder Samen von erfindungsgemäß behandelten Raps gewonnene Öl kann im Lebensmittelbereich, z.B. als Speiseöl oder zur Herstellung von Margarine, im Kosmetikbereich, z.B. als Trägerstoff, als Schmierstoff oder zur Energiegewinnung, d.h. als Brennstoff oder Kraftstoff, eingesetzt werden. Bei einer Verwendung im Lebensmittelbereich muss das erhaltene Öl gegebenenfalls noch weiteren Raffinationsschritten unterworfen werden, um eventuell vorhandene unerwünschte Geschmacksstoffe, Geruchsstoffe, Farbstoffe, ungenießbare Komponenten und dergleichen zu entfernen.

Vorzugsweise wird das Öl als Brennstoff oder Kraftstoff eingesetzt.

Das erfindungsgemäße Öl zeichnet sich unter anderem durch einen verringerten Säuregehalt und/oder eine verbesserte Oxidationsstabilität und/oder einen verringerten Phosphorgehalt und/oder einen verringerten Gehalt an Alkali- und vor allem Erdalkalimetallverbindungen und/oder einen verringerten Gehalt an Schwebeteilchen und anderen störenden Komponenten im Vergleich zu Ölen, die aus unbehandelten Ölpflanzen gewonnen werden, aus. Zusätzlich oder alternativ zeichnet sich das erfindungsgemäße Öl durch wenigstens eine unter (iv), (v) und (vii) bis (ix), (xi) und (xii) aufgeführte Eigenschaft aus, beispielsweise durch eine niedrigere Iodzahl, niedrigere kinematische Viskosität und/oder geringere Gesamtverschmutzung etc. (im Vergleich zu Ölen, die aus nicht erfindungsgemäß behandelten Pflanzen gewonnen wurden).

Bei den Umsetzungsprodukten des Öls handelt es sich vorzugsweise um dessen Umesterungsprodukte mit C₁-C₄-Alkoholen, d.h. um die C₁-C₄-Alkylester der den Ölen zugrunde liegenden Fettsäuren. Besonders bevorzugt handelt es sich um die Umesterungsprodukte des Öls mit Methanol oder Ethanol und insbesondere mit Methanol, d.h. um die Methyl- oder Ethylester und insbesondere um die Methylester der den Ölen zugrunde liegenden Fettsäuren. Die C₁-C₄-Alkylester sind dadurch erhältlich, dass man das Rapsöl mit einem C₁-C₄-Alkohol, meist in Gegenwart eines Katalysators (in der Regel eine Base), umestert. Dabei werden die Fettsäuretriglyceride des Öls in die C₁-C₄-Alkylester der entsprechenden Fettsäuren überführt. Diese Ester werden im Rahmen der vorliegenden Erfindung als C₁-C₄-Alkylester des Pflanzenöls bezeichnet.

Die Umsetzungsprodukte des Öls und insbesondere dessen Umesterungsprodukte mit C₁-C₄-Alkoholen sind vor allem für einen Einsatz zur Energiegewinnung, d.h. als Kraftstoff oder Brennstoff, geeignet.

Die erfindungsgemäßen Umsetzungsprodukte des Öls und insbesondere die C₁-C₄-Alkylester des Öls zeichnen sich durch die beim Öl genannten Eigenschaften aus.

Beim Pressen der Früchte und/oder Samen von Raps erhält man als Rückstand einen Presskuchen, der sich wie die Früchte und Samen durch einen verringerten Gehalt an Phosphor- und/oder Alkalimetall- und vor allem Erdalkalimetallverbindungen und insbesondere durch einen verringerten Phosphorgehalt auszeichnet. Auch der Säuregehalt kann erniedrigt sein. Dieser kann sowohl im Futtermittelbereich als auch zur direkten Energiegewinnung, d.h. als Brennstoff, vor allem in Feuerungsanlagen, eingesetzt werden, wobei ein Einsatz zur Energiegewinnung bevorzugt ist.

Die Rapserzeugnisse sind unter Ölen und deren Umsetzungsprodukten, z.B. den Umesterungsprodukten mit C₁-C₄-Alkoholen, ausgewählt.

Weiterhin ist Gegenstand der vorliegenden Erfindung ein regenerativer Brennstoff, der ein erfindungsgemäßes Öl und/oder wenigstens ein Umesterungsprodukt davon mit einem C₁-C₄-Alkanol enthält.

Unter regenerativen Brennstoffen sollen im Rahmen der vorliegenden Erfindung Brennstoffe verstanden werden, die wenigstens 1 Gew.-%, vorzugsweise wenigstens 5 Gew.-%, stärker bevorzugt wenigstens 10 Gew.-%, noch stärker bevorzugt wenigstens 20 Gew.-% und insbesondere wenigstens 50 Gew.-%, bezogen auf das Gesamtgewicht des Brennstoffs, Biodiesel und/oder Pflanzenöle umfassen. Speziell besteht der regenerative Brennstoff vollständig aus Biodiesel und/oder Pflanzenölen. Wenn der regenerative Brennstoff nicht vollständig aus Biodiesel und/oder Pflanzenölen besteht, so umfasst er neben Biodiesel und/oder Pflanzenölen einen weiteren Brennstoff, der z.B. regenerativer Natur sein kann, wie BTL-Kraftstoffe (biomass to liquid), oder auch mineralischer Natur, wie mineralische Brennstoffe, beispielsweise Mitteldestillate, wie Diesel, Heizöl oder Kerosin.

Unter Brennstoffen versteht man im Rahmen der vorliegenden Erfindung Stoffe, die mit Luftsauerstoff unter Abgabe nutzbarer Energie, z.B. in Form von Wärme, wirtschaftlich verbrannt werden können. Die Wärme kann dann entweder direkt genutzt werden, z.B. in Heizkesseln oder Heizungsanlagen, zur Stromerzeugung eingesetzt werden oder in kinetische Energie, z.B. zum Betrieb von Motoren, umgewandelt werden. Zu den Brennstoffen zählen somit beispielsweise Heizöle und Kraftstoffe. Kraftstoffe sind Brennstoffe, die zum Betrieb von Verbrennungsmotoren, wie Ottomotoren oder Dieselmotoren, dienen, z.B. Ottokraftstoffe, Dieselkraftstoffe, Kerosin und dergleichen.

Unter Biodiesel versteht man allgemein die Niederalkylester von Pflanzenölen (oder auch tierischen Fetten), d.h. deren C₁-C₄-Alkylester, insbesondere deren Ethyl- oder Methylester und speziell deren Methylester.

Die Niederalkylester werden insbesondere dann verwendet bzw. den Pflanzenölen zugemischt, wenn die hohe Viskosität des Pflanzenöls problematisch ist.

Dementsprechend stellt der erfindungsgemäße regenerative Brennstoff ein Gemisch aus dem erfindungsgemäßen Rapsöl und/oder dessen C₁-C₄-Alkylester mit einem mineralischen Brennstoff, z.B. mineralischem Dieselkraftstoff oder mineralischem Heizöl, oder anderen konventionellen oder regenerativen Brennstoffen dar oder er besteht im Wesentlichen vollständig aus dem erfindungsgemäßen Pflanzenöl und/oder dessen C₁-C₄-Alkylester.

Die Umesterung des erfindungsgemäßen Pflanzenöls mit C₁-C₄-Alkoholen zu deren C₁-C₄-Alkylestern kann gemäß gängiger Verfahren erfolgen. Die C₁-C₄-Alkylester der erfindungsgemäßen Öle sind ebenfalls Gegenstand der Erfindung.

Schließlich ist Gegenstand der Erfindung ein Verfahren zur Verbesserung der Verbrennung in Motoren und Feuerungsanlagen, bei dem man die Motoren oder die Feuerungsanlagen wenigstens teilweise mit einem hierfür geeigneten erfindungsgemäßen Ölpflanzenprodukt betreibt.

Unter Feuerungsanlagen versteht man alle Anlagen, bei denen geeignete Brennstoffe zur direkten oder indirekten Erzeugung von Energie, z.B. in Form von Wärme, Dampf und/oder Strom, verbrannt werden.

Bei den Motoren handelt es sich im Allgemeinen um Motoren, die sich grundsätzlich mit regenerativen Brennstoffen betreiben lassen. Hierzu gehören vor allem Dieselmotoren, z.B. Dieselmotoren in Personenkraftwagen, Lastkraftwagen, Bussen und landwirtschaftlichen Nutzfahrzeugen wie Traktoren oder auch in Blockheizkraftwerken.

Vorzugsweise betreibt man die Motoren mit dem erfindungsgemäßen regenerativen Brennstoff. Es versteht sich von selbst, dass für den Fall, dass der regenerative Brennstoff neben Biodiesel und/oder Pflanzenölen auch mineralische Brennstoffe enthält, diese unter mineralischen Kraftstoffen, z.B. mineralischen Dieselkraftstoffen, ausgewählt sind.

Die Feuerungsanlagen können mit dem erfindungsgemäßen regenerativen Brennstoff, mit dem erfindungsgemäßen Presskuchen und/oder mit den erfindungsgemäßen ölhaltigen Samen betrieben werden.

Durch das erfindungsgemäße Betreiben von Motoren und Feuerungsanlagen wird deren Lebensdauer verlängert und die Wartungsarbeit vereinfacht.

Durch die Behandlung von Raps mit den zuvor spezifizierten Fungiziden erhält man Rapserzeugnisse die eine im Vergleich zu Erzeugnissen aus nicht erfindungsgemäß behandelten Ölpflanzen höhere Qualität aufweisen. Insbesondere zeichnen sie sich durch einen niedrigeren Säuregehalt und/oder eine erhöhte Oxidationsstabilität (vor allem bei Öl und dessen Umsetzungsprodukten) und/oder auch einen niedrigeren Phosphorgehalt und/oder Alkali-/Erdalkalimetallgehalt aus. In den Pflanzenölen und deren Umsetzungsprodukten sind darüber hinaus auch andere für den Einsatz der Pflanzenöle im Biodieselbereich störende Komponenten in deutlich geringeren Mengen enthalten. Außerdem wird die kinematische Viskosität der Pflanzenöle erniedrigt, was ein Vorteil für die Verwendung der Öle selbst als regenerative Brennstoffe ist. Zudem führt die Behandlung mit den oben genanten Fungiziden speziell bei Samenölpflanzen zu einer verringerten Sprödigkeit der Samenschale, was einerseits eine Anwendung von niedrigeren Drücken zur Gewinnung des Öls aus den Samen erlaubt und andererseits auch bei Anwendung hoher Pressdrücke die Einhaltung von Grenzwerten bezüglich des Gehalts an bestimmten Stoffen, z.B. von Phosphorverbindungen, ermöglicht. Die verbesserten Eigenschaften der Rapserzeugnisse, insbesondere des Öls oder der Umsetzungsprodukte davon, führen insgesamt zu verbesserten wirtschaftlichen Nutzungsmöglichkeiten von regenerativen Kraft- und Brennstoffen. Erwähnt sei nur als Beispiel, dass die verbesserten Eigenschaften der Öle oder der Umsetzungsprodukte davon ein stärkeres Blenden mit minderwertigeren Brenn- und Kraftstoffen erlauben.

Die Erfindung wird nun durch die folgenden nicht einschränkenden Beispiele näher erläutert.

### Beispiele

### 1. Phosphorgehalt und Erdalkalimetallgehalt von Öl

### 1.1 Phosphorgehalt und Erdalkalimetallgehalt von Öl bei Behandlung von Raps mit Metconazol bei Pressen mit Normaldruck

Raps wurde 2004/2005 unter üblichen Bedingungen in Deutschland angebaut. Im Herbst 2004 (Wachstumsstadium BBCH 14-16) und im Frühjahr 2005 (Wachstumsstadium BBCH 31-51) wurde ein Teil des Rapses mit Metconazol (eingesetzt in Form des kommerziell erhältlichen Produkts Caramba®; Aufwandmenge: je 60 g Wirkstoff pro ha) durch Spritzen behandelt. Zum Vergleich blieb der restliche Teil des Rapses unbehandelt. Die Ernte erfolgte im Sommer 2005 (Wachstumsstadium BBCH 92). Die Rapssaaten wurden mit einer Presse der Fa. Ökotec unter Normaldruck (8er Düse, 40 U/min, 60 °C Presskopftemperatur) verpresst und der Phosphorgehalt und der Erdalkalimetallgehalt (Ca, Mg) des erhaltenen Öls wurden gemäß DIN EN 14107 bzw. DIN EN 14538 bestimmt. Die Ergebnisse sind in nachfolgender Tabelle aufgeführt.

**Tabelle 1**

| Behandlung | unbehandelt | 2 x Metconazol |
|---|---|---|
| Phosphorgehalt [mg/kg] | 1,9 | < 1 |
| Erdalkalimetallgehalt (Ca + Mg) [mg/kg] | 5,7 | 3,9 |

### 1.2 Phosphorgehalt von Öl bei Behandlung von Raps mit Metconazol bzw. Metconazol in Kombination mit Boscalid und Pressen mit Hochdruck

Raps der Sorte "Trabant" wurde 2005/2006 unter üblichen Bedingungen am Standort Bothkamp in Deutschland angebaut. Im Herbst 2005 (Wachstumsstadium BBCH 16-18) und im Frühjahr 2006 (BBCH 31-51) wurde ein Teil der Rapspflanzen mit Metconazol (eingesetzt in Form des kommerziell erhältlichen Produkts Caramba®; Aufwandmenge: je 60 g Wirkstoff pro ha) durch Spritzen behandelt. Ein weiterer Teil der Rapspflanzen wurde außerdem während der Blüte (BBCH 65) zusätzlich mit Boscalid (eingesetzt in Form des kommerziell erhältlichen Produkts Cantus®; Aufwandmenge: 250 g Wirkstoff pro ha) durch Spritzen behandelt. Zum Vergleich blieb ein Teil der Rapspflanzen unbehandelt. Die Ernte erfolgte im Sommer 2006 (Wachstumsstadium BBCH 92). Die Rapssaaten wurden mit einer Presse der Fa. Ökotec unter Hochdruck (6er Düse, 70 U/min, >70 °C Presskopftemperatur) verpresst und der Phosphorgehalt des erhaltenen Öls wurde gemäß DIN EN 14107 bestimmt. Die Ergebnisse sind in nachfolgender Tabelle aufgeführt.

**Tabelle 2**

| Behandlung | unbehandelt | 2xMetconazol, | 2xMetconazol; 1xBoscalid |
|---|---|---|---|
| Phosphorgehalt [mg/kg] | 5,0 | 4,0 | 3,0 |

### 1.3 Erdalkalimetallgehalt von Öl bei Behandlung von Raps mit Metconazol und Pressen mit Normaldruck und Hochdruck

Raps der Sorte "Trabant" wurde 2005/2006 unter üblichen Bedingungen am Standort Bothkamp in Deutschland angebaut. Im Herbst 2005 (Wachstumsstadium BBCH 16-18) und im Frühjahr 2006 (BBCH 31-51) wurde ein Teil der Rapspflanzen mit Metconazol (eingesetzt in Form des kommerziell erhältlichen Produkts Caramba®; Aufwandmeng: je 60 g Wirkstoff pro ha) durch Spritzen behandelt. Zum Vergleich blieb der restliche Teil der Rapspflanzen unbehandelt. Die Ernte erfolgte im Sommer 2006 (Wachstumsstadium BBCH 92). Die Rapssaaten wurden mit einer Presse der Fa. Ökotec verpresst und der Erdalkalimetallgehalt (Ca, Mg) des erhaltenen Öls wurde gemäß DIN EN 14538 bestimmt. Dabei wurde ein Teil der Rapssaten unter Normaldruck (8er Düse, 40 U/min, 60 °C Presskopftemperatur) und ein anderer Teil unter Hochdruck (6er Düse, 70 U/min, >70 °C Presskopftemperatur) verpresst. Die Ergebnisse sind in nachfolgender Tabelle aufgeführt.

**Tabelle 3**

| Behandlung | unbehandelt | 2 x Metconazol |
|---|---|---|
| Erdalkalimetallgehalt (Ca+Mg) [mg/kg] - Normaldruck | 6 | 4 |
| Erdalkalimetallgehalt (Ca+Mg) [mg/kg] - Hochdruck | 9 | 5 |

Wie sich aus dem Vergleich der Ergebnisse für Öl aus unbehandeltem Raps ergibt, stammt ein nicht unerheblicher Teil der im Öl enthaltenen Erdalkalimetalle aus der Samenschale. Die im Vergleich zum Versuch mit Normaldruck deutlich stärkere Erniedrigung des Erdalkalimetallgehalts von mit Hochdruck gewonnenem Öl zeigt, dass Metconazol nicht nur eine systemische Wirkung in Bezug auf den Erdalkalimetallgehalt besitzt, sondern auch die Sprödigkeit der Samenschale verringern muss.

### 2. Gesamtverschmutzung des Öls

### 2.1 Gesamtverschmutzung von Öl bei Behandlung von Raps mit Boscalid, Boscalid in Kombination mit Dimoxystrobin, Prothioconazol oder Azoxystrobin

Raps der Sorte "Lioness" wurde 2005/2006 unter üblichen Bedingungen in Großbritannien angebaut. Während der Blüte (Wachstumsstadium BBCH 61-65) wurden die Rapspflanzen entweder mit Boscalid (eingesetzt in Form des kommerziell erhältlichen Produkts Cantus®; Aufwandmenge: 250 g Wirkstoff pro ha), mit Boscalid in Kombination mit Dimoxystrobin (eingesetzt in Form des kommerziell erhältlichen Produkts Pictor®; Aufwandmenge: je 100 g Wirkstoff pro ha), mit Prothioconazol (eingesetzt in Form des kommerziell erhältlichen Produkts Proline®; Aufwandmenge: 175 g Wirkstoff pro ha) oder mit Azoxystrobin (eingesetzt in Form des kommerziell erhältlichen Produkts Amistar®; Aufwandmenge: 200 g Wirkstoff pro ha) durch Spritzen behandelt. Zum Vergleich blieb ein Teil der Rapspflanzen unbehandelt. Die Ernte erfolgte im Sommer 2006 (BBCH 92). Die Rapssaaten wurden mit einer Presse der Fa. Ökotec unter Normaldruck (8er Düse, 40 U/min, 60 °C Presskopftemperatur) verpresst und die Gesamtverschmutzung des erhaltenen Öls wurde gemäß DIN EN 12662 bestimmt. Die Ergebnisse sind in nachfolgender Tabelle aufgeführt.

**Tabelle 4**

| Behandlung | unbehandelt | Boscalid | Boscalid + Dimoxystrobin | Prothioconazol | Azoxystrobin |
|---|---|---|---|---|---|
| Gesamtverschmutzung [mg/kg] | 33 | 20 | 10 | 22 | 24 |

### 3. Oxidationsstabilität

### 3.1 Oxidationsstabilität von Öl bei Behandlung von Raps mit Metconazol in Kombination mit Boscalid und mit Tebuconazol in Kombination mit Prothioconazol

Raps wurde 2004/2005 unter üblichen Bedingungen in Deutschland angebaut. Im Herbst 2004 (Wachstumsstadium BBCH 14-16) und im Frühjahr 2005 (Wachstumsstadium BBCH 31-51) wurde ein Teil der Rapspflanzen mit Metconazol (eingesetzt in Form des kommerziell erhältlichen Produkts Caramba®; Aufwandmenge: je 60 g Wirkstoff pro ha) durch Spritzen. Während der Blüte (BBCH 63-65) wurden diese Rapspflanzen dann mit Boscalid (eingesetzt in Form des kommerziell erhältlichen Produkts Cantus®; Aufwandmenge: 250 g Wirkstoff pro ha) durch Spritzen behandelt. Ein anderer Teil der Rapspflanzen wurde im Herbst 2004 (Wachstumsstadium BBCH 14-16) und im Frühjahr 2005 (Wachstumsstadium BBCH 31-51) mit Tebuconazol (eingesetzt in Form des kommerziell erhältlichen Produkts Folicur®; Aufwandmenge: 251 g Wirkstoff pro ha) durch Spritzen behandelt. Während der Blüte (BBCH 63-65) wurden diese Rapspflanzen dann mit Prothioconazol (eingesetzt in Form des kommerziell erhältlichen Produkts Proline®; Aufwandmenge: 175 g Wirkstoff pro ha) durch Spritzen behandelt. Zum Vergleich blieb der restliche Teil der Rapspflanzen unbehandelt. Die Ernte erfolgte jeweils im Sommer 2005 (Wachstumsstadium BBCH 92). Die Rapssaaten wurden mit einer Presse der Fa. Ökotec unter Normaldruck (8er Düse, 40 U/min, 60 °C Presskopftemperatur) verpresst und die Oxidationsstabilität bei 110 °C des erhaltenen Öls wurde gemäß DIN EN 14112 bestimmt. Die Ergebnisse sind in nachfolgender Tabelle aufgeführt.

**Tabelle 5**

| Behandlung | unbehandelt | 2xMetconazol, 1xBoscalid | 2xTebuconazol; 1xProthioconazol |
|---|---|---|---|
| Oxidationsstabilität bei 110 °C [h] | 7,2 | 8,4 | 8,6 |

### 3.2 Oxidationsstabilität von Öl bei Behandlung von Raps mit Boscalid bzw. Boscalid in Kombination mit Dimoxystrobin

Raps der Sorte "Talent" wurde 2005/2006 unter üblichen Bedingungen am Standort Tachenhausen in Deutschland angebaut. Während der Blüte (Wachstumsstadium BBCH 61-65) wurden die Rapspflanzen entweder mit Boscalid (eingesetzt in Form des kommerziell erhältlichen Produkts Cantus®; Aufwandmenge: 250 g Wirkstoff pro ha) oder mit Boscalid in Kombination mit Dimoxystrobin (eingesetzt in Form des kommerziell erhältlichen Produkts Pictor®; Aufwandmenge: je 100 g Wirkstoff pro ha) durch Spritzen behandelt. Zum Vergleich blieb ein Teil der Rapspflanzen unbehandelt. Die Ernte erfolgte im Sommer 2006 (BBCH 92). Die Rapssaaten wurden mit einer Presse der Fa. Ökotec unter Normaldruck (8er Düse, 40 U/min, 60 °C Presskopftemperatur) verpresst und die Oxidationsstabilität des erhaltenen Öls wurde gemäß DIN EN 14112 bestimmt. Die Ergebnisse sind in nachfolgender Tabelle aufgeführt.

**Tabelle 6**

| Behandlung | unbehandelt | Boscalid | Boscalid + Dimoxystrobin |
|---|---|---|---|
| Oxidationsstabilität bei 110 °C [h] | 9,5 | 9,7 | 9,9 |

### 4. Säuregehalt

### 4.1 Säuregehalt von Öl bei Behandlung von Raps mit Metconazol in Kombination mit Boscalid und mit Tebuconazol in Kombination mit Prothioconazol

Raps wurde 2004/2005 unter üblichen Bedingungen in Deutschland angebaut. Im Herbst 2004 (Wachstumsstadium BBCH 14-16) und im Frühjahr 2005 (Wachstumsstadium BBCH 31-51) wurde ein Teil der Rapspflanzen mit Metconazol (eingesetzt in Form des kommerziell erhältlichen Produkts Caramba®; Aufwandmenge: je 60 g Wirkstoff pro ha) durch Spritzen behandelt. Während der Blüte (BBCH 63-65) wurden diese Rapspflanzen dann mit Boscalid (eingesetzt in Form des kommerziell erhältlichen Produkts Cantus®; Aufwandmenge250 g Wirkstoff pro ha) durch Spritzen behandelt. Ein weiterer Teil der Rapspflanzen wurde im Herbst 2004 (Wachstumsstadium BBCH 14-16) und im Frühjahr 2005 (Wachstumsstadium BBCH 31-51) mit Tebuconazol (eingesetzt in Form des kommerziell erhältlichen Produkts Folicur®; Aufwandmenge: 251 g Wirkstoff pro ha) durch Spritzen behandelt. Während der Blüte (BBCH 63-65) wurden diese Rapspflanzen dann mit Prothioconazol (eingesetzt in Form des kommerziell erhältlichen Produkts Proline®; Aufwandmenge: 175 g Wirkstoff pro ha) durch Spritzen behandelt. Zum Vergleich blieb der restliche Teil der Rapspflanzen unbehandelt. Die Ernte erfolgte jeweils im Sommer 2005 (BBCH 92). Die Rapssaaten wurden mit einer Presse der Fa. Ökotec unter Normaldruck (8er Düse, 40 U/min, 60 °C Presskopftemperatur) verpresst und der Säuregehalt des erhaltenen Öls wurde gemäß DIN EN 14104 bestimmt. Die Ergebnisse sind in nachfolgender Tabelle aufgeführt.

**Tabelle 7**

| Behandlung | unbehandelt | 2xMetconazol, 1xBoscalid | 2xTebuconazol; 1xProthioconazol |
|---|---|---|---|
| Säurezahl [mg KOH/g] | 0,307 | 0,254 | 0,296 |

### 4.2 Säuregehalt von Öl bei Behandlung von Raps mit Boscalid bzw. Boscalid in Kombination mit Dimoxystrobin

Raps der Sorte "Lioness" wurde 2005/2006 unter üblichen Bedingungen in Großbritannien angebaut. Während der Blüte (Wachstumsstadium BBCH 61-65) wurden die Rapspflanzen entweder mit Boscalid (eingesetzt in Form des kommerziell erhältlichen Produkts Cantus®; Aufwandmenge: 250 g Wirkstoff pro ha) oder mit Boscalid in Kombination mit Dimoxystrobin (eingesetzt in Form des kommerziell erhältlichen Produkts Pictor®; Aufwandmenge: je 100 g Wirkstoff pro ha) durch Spritzen behandelt. Zum Vergleich blieb ein Teil der Rapspflanzen unbehandelt. Die Ernte erfolgte jeweils im Sommer 2006 (BBCH 92). Die Rapssaaten wurden mit einer Presse der Fa. Ökotec unter Normaldruck (8er Düse, 40 U/min, 60 °C Presskopftemperatur) verpresst und der Säuregehalt des erhaltenen Öls wurde gemäß DIN EN 14104 bestimmt. Die Ergebnisse sind in nachfolgender Tabelle aufgeführt.

**Tabelle 8**

| Behandlung | unbehandelt | Boscalid | Boscalid + Dimoxystrobin |
|---|---|---|---|
| Säurezahl [mg KOH/g] | 0,41 | 0,32 | 0,22 |

### 5. Kinematische Viskosität

### 5.1 Kinematische Viskosität von Öl bei Behandlung von Raps mit Boscalid in Kombination mit Dimoxystrobin

Raps der Sorte "Lioness" wurde 2005/2006 unter üblichen Bedingungen in Großbritannien angebaut. Während der Blüte (Wachstumsstadium BBCH 61-65) wurden die Rapspflanzen mit Boscalid in Kombination mit Dimoxystrobin (eingesetzt in Form des kommerziell erhältlichen Produkts Pictor®; Aufwandmenge: je 100 g Wirkstoff pro ha) durch Spritzen behandelt. Zum Vergleich blieb ein Teil der Rapspflanzen unbehandelt. Die Ernte erfolgte im Sommer 2006 (BBCH 92). Die Rapssaaten wurden mit einer Presse der Fa. Ökotec unter Normaldruck (8er Düse, 40 U/min, 60 °C Presskopftemperatur) verpresst und die kinematische Viskosität des erhaltenen Öls wurde bei 40 °C gemäß EN ISO 3104 bestimmt. Die Ergebnisse sind in nachfolgender Tabelle aufgeführt.

**Tabelle 9**

| Behandlung | unbehandelt | Boscalid + Dimoxystrobin |
|---|---|---|
| Kinematische Viskosität [mm²/s] | 35,2 | 33,3 |

### 6. Iodzahl

### 6.1 Iodzahl von Öl bei Behandlung von Raps mit Boscalid

Raps der Sorte "Talent" wurde 2005/2006 unter üblichen Bedingungen am Standort Tachenhausen in Deutschland angebaut. Während der Blüte (Wachstumsstadium BBCH 61-65) wurden die Rapspflanzen mit Boscalid (eingesetzt in Form des kommerziell erhältlichen Produkts Cantus®; Aufwandmenge: 250 g Wirkstoff pro ha) durch Spritzen behandelt. Zum Vergleich blieb ein Teil der Rapspflanzen unbehandelt. Die Ernte erfolgte im Sommer 2006 (BBCH 92). Die Rapssaaten wurden mit einer Presse der Fa. Ökotec unter Normaldruck (8er Düse, 40 U/min, 60 °C Presskopftemperatur) verpresst und die Iodzahl des erhaltenen Öls wurde gemäß EN 14111 bestimmt. Die Ergebnisse sind in nachfolgender Tabelle aufgeführt.

**Tabelle 10**

| Behandlung | unbehandelt | Boscalid |
|---|---|---|
| Iodzahl [g Iod pro 100 g] | 108 | 105 |

### 7. Schwefelgehalt

### 7.1 Schwefelgehalt von Öl bei Behandlung von Raps mit Boscalid, Boscalid in Kombination mit Dimoxystrobin, Prothioconazol oder Azoxystrobin

Raps der Sorte "Lioness" wurde 2005/2006 unter üblichen Bedingungen in Großbritannien angebaut. Während der Blüte (Wachstumsstadium BBCH 61-65) wurden die Rapspflanzen entweder mit Boscalid (eingesetzt in Form des kommerziell erhältlichen Produkts Cantus®; Aufwandmenge: 250 g Wirkstoff pro ha), mit Boscalid in Kombination mit Dimoxystrobin (eingesetzt in Form des kommerziell erhältlichen Produkts Pictor®; Aufwandmenge: je 100 g Wirkstoff pro ha), mit Prothioconazol (eingesetzt in Form des kommerziell erhältlichen Produkts Proline®; Aufwandmenge: 175 g Wirkstoff pro ha) oder mit Azoxystrobin (eingesetzt in Form des kommerziell erhältlichen Produkts Amistar®; Aufwandmenge: 200 g Wirkstoff pro ha) durch Spritzen behandelt. Zum Vergleich blieb ein Teil der Rapspflanzen unbehandelt. Die Ernte erfolgte im Sommer 2006 (BBCH 92). Die Rapssaaten wurden mit einer Presse der Fa. Ökotec unter Normaldruck (8er Düse, 40 U/min, 60 °C Presskopftemperatur) verpresst und der Schwefelgehalt des erhaltenen Öls wurde gemäß EN ISO 20884 bestimmt. Die Ergebnisse sind in nachfolgender Tabelle aufgeführt.

**Tabelle 11**

| Behandlung | unbehandelt | Boscalid | Boscalid + Dimoxystrobin | Prothioconazol | Azoxystrobin |
|---|---|---|---|---|---|
| Schwefelgehalt [mg/kg] | 4 | 2 | 2 | 2 | 2 |

## Patentansprüche

1. Verwendung wenigstens eines Fungizids, das ausgewählt ist unter Aryl- und Heterocyclylaniliden, Carbamaten, Dicarboximiden, Azolen, Strobilurinen und Morpholinen, zur Erhöhung der Qualität von Ölpflanzenerzeugnissen, wobei die Erhöhung der Qualität unter folgenden Kriterien ausgewählt ist:
(i) Verringerung des Phosphorgehalts wenigstens eines Ölpflanzenerzeugnisses;
(ii) Verringerung des Alkali- und/oder Erdalkaligehalts wenigstens eines Ölpflanzenerzeugnisses;
(iii) Erhöhung der Oxidationsstabilität wenigstens eines Ölpflanzenerzeugnisses;
(iv) Verringerung der Gesamtverschmutzung wenigstens eines Ölpflanzenerzeugnisses;
(v) Erniedrigung der Iodzahl wenigstens eines Ölpflanzenerzeugnisses;
(vi) Erniedrigung der Säurezahl wenigstens eines Ölpflanzenerzeugnisses;
(vii) Verringerung der kinematischen Viskosität wenigstens eines Ölpflanzenerzeugnisses;
(viii) Verringerung des Schwefelgehalts wenigstens eines Ölpflanzenerzeugnisses;
(ix) Erhöhung des Flammpunkts wenigstens eines Ölpflanzenerzeugnisses;
(xi) Verringerung des Koksrückstands wenigstens eines Ölpflanzenerzeugnisses; und
(xii) Erhöhung der Cetanzahl wenigstens eines Ölpflanzenerzeugnisses;
wobei die Ölpflanzenerzeugnisse ausgewählt sind unter dem aus Raps gewonnenen Öl und Umsetzungsprodukten des Öls, wobei es sich bei den Umsetzungsprodukten des Öls um die Umesterungsprodukte des Öls mit C₁-C₄-Alkoholen handelt.

2. Verwendung nach Anspruch 1, außerdem zur Erhöhung der Quantität von Ölpflanzenerzeugnissen.

3. Verwendung von Fungiziden, die ausgewählt sind unter Aryl- und Heterocyclylaniliden, Carbamaten, Dicarboximiden, Strobilurinen, Azolen und Morpholinen, zur Verringerung der Sprödigkeit der Samenschalen von Raps.

4. Verwendung nach einem der vorhergehenden Ansprüche, wobei die Fungizide ausgewählt sind unter Aryl- und Heterocyclylaniliden, Azolen, Strobilurinen und Gemischen davon.

5. Verwendung nach einem der vorhergehenden Ansprüche, wobei die Aryl- und Heterocyclylanilide ausgewählt sind unter Verbindungen der Formel I.1 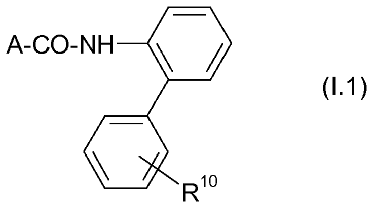 worin A für eine Gruppe der Formel A1 bis A8 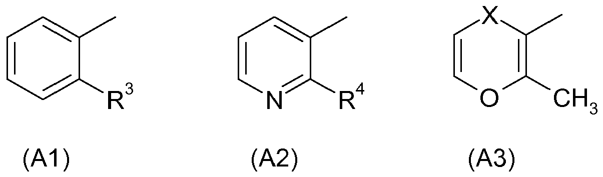 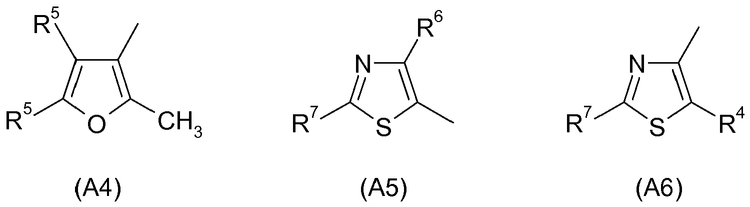 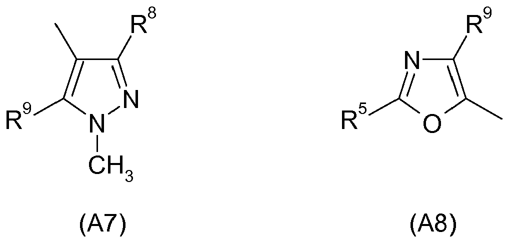 steht, worin
X für CH₂, S, SO oder SO₂ steht;
R³ für CH₃, CHF₂, CF₃, Cl, Br oder I steht;
R⁴ für CF₃ oder Cl steht;
R⁵ für Wasserstoff oder CH₃ steht;
R⁶ für CH₃, CHF₂, CF₃ oder Cl steht;
R⁷ für Wasserstoff, CH₃ oder Cl steht;
R⁸ für CH₃, CHF₂ oder CF₃ steht;
R⁹ für Wasserstoff, CH₃, CHF₂, CF₃ oder Cl steht; und
R¹⁰ für C₁-C₄-Alkyl, C₁-C₄-Alkoxy, C₁-C₄-Alkylthio oder Halogen steht.

6. Verwendung nach Anspruch 5, wobei A für die Gruppe A2 steht, worin R⁴ für Halogen steht und wobei R¹⁰ für Halogen steht.

7. Verwendung nach Anspruch 6, wobei das Anilid I ausgewählt ist unter Aniliden der Formeln I.1.1 und I.1.2

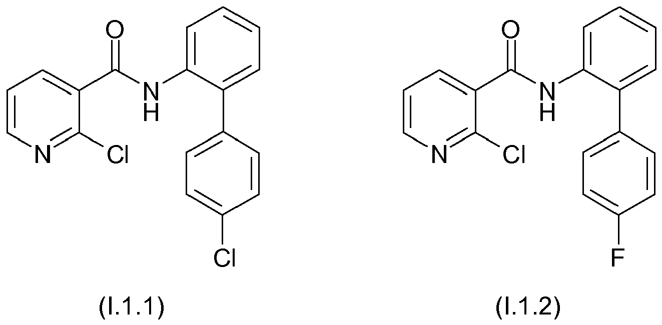

8. Verwendung nach einem der vorhergehenden Ansprüche, wobei die Azole ausgewählt sind unter Flusilazol, Metconazol, Prothioconazol und Tebuconazol.

9. Verwendung nach einem der vorhergehenden Ansprüche, wobei die Strobilurine ausgewählt sind unter Azoxystrobin, Dimoxystrobin und Pyraclostrobin.

## Claims

1. The use of at least one fungicide which is selected among aryl and heterocyclylanilides, carbamates, dicarboximides, azoles, strobilurins and morpholines for increasing the quality of oil crop products, the increase of the quality being selected among the following criteria:
(i) reduction of the phosphorus content of at least one oil-crop product;
(ii) reduction of the alkali metal and/or alkaline-earth metal content of at least one oil-crop product;
(iii) increase of the stability to oxidation of at least one oil-crop product;
(iv) reduction of the overall contamination of at least one oil-crop product;
(v) reduction of the iodine number of at least one oil-crop product;
(vi) reduction of the acid number of at least one oil-crop product;
(vii) reduction of the kinematic viscosity of at least one oil-crop product;
(viii) reduction of the sulfur content of at least one oil-crop product;
(ix) increase of the flashpoint of at least one oil-crop product;
(xi) reduction of the coke residue of at least one oil-crop product; and
(xii) increase of the cetane number of at least one oil-crop product;
the oil crop products being selected among the oil obtained from oilseed rape and reaction products of the oil, the reaction products of the oil being the transesterification products of the oil with C₁-C₄-alcohols.

2. The use according to claim 1, moreover for increasing the quantity of oil crop products.

3. The use of fungicides which are selected among aryl and heterocyclyl anilides, carbamates, dicarboximides, strobilurins, azoles and morpholines for reducing the brittleness of the seed coats of oilseed rape.

4. The use according to any of the preceding claims, the fungicides being selected among aryl- and heterocyclylanilides, azoles, strobilurins and mixtures thereof.

5. The use according to any of the preceding claims, the aryl- and heterocyclylanilides being selected among compounds of the formula I.1 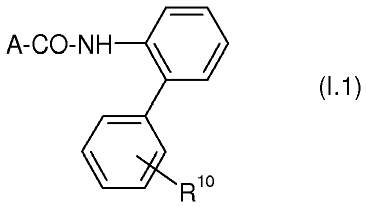 in which A is a group of the formula A1 to A8 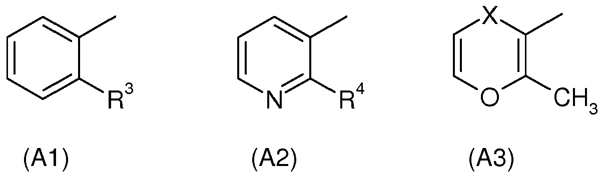 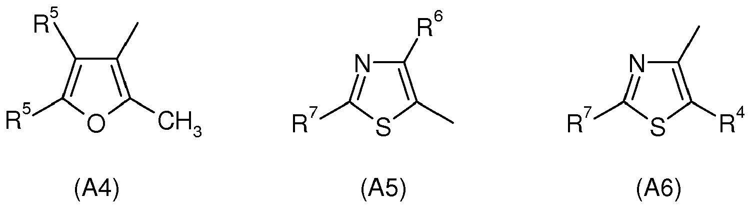 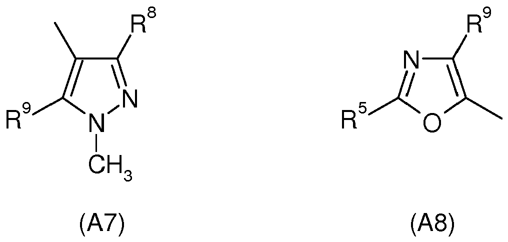 in which
X is CH₂, S, SO or SO₂;
R³ is CH₃, CHF₂, CF₃, Cl, Br or I;
R⁴ is CF₃ or Cl;
R⁵ is hydrogen or CH₃;
R⁶ is CH₃, CHF₂, CF₃ or Cl;
R⁷ is hydrogen, CH₃ or Cl;
R⁸ is CH₃, CHF₂ or CF₃;
R⁹ is hydrogen, CH₃, CHF₂, CF₃ or Cl; and
R¹⁰ is C₁-C₄-alkyl, C₁-C₄-alkoxy, C₁-C₄-alkylthio or halogen.

6. The use according to claim 5, wherein A is the group A2, in which R⁴ is halogen and R¹⁰ is halogen.

7. The use according to claim 6, the anilide I being selected among anilides of the formulae I.1.1 and 1.1.2

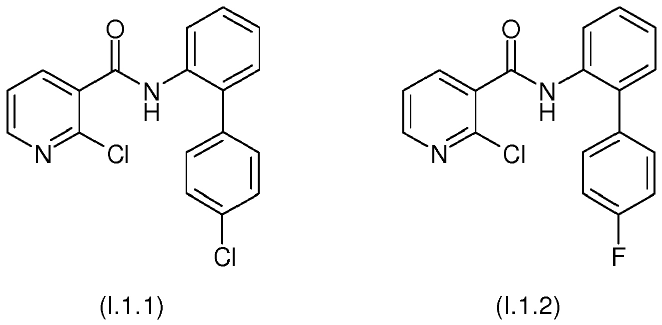

8. The use according to any of the preceding claims, the azoles being selected among flusilazol, metconazole, prothioconazole and tebuconazole.

9. The use according to any of the preceding claims, the strobilurins being selected among azoxystrobin, dimoxystrobin and pyraclostrobin.

## Revendications

1. Utilisation d'au moins un fongicide, qui est choisi parmi les aryl- et hétérocyclylanilides, carbamates, dicarboximides, azoles, strobilurines et morpholines, pour l'augmentation de la qualité de produits de plantes oléagineuses, l'augmentation de la qualité étant choisie parmi les critères suivants :
(i) diminution de la teneur en phosphore d'au moins un produit de plante oléagineuse ;
(ii) diminution de la teneur en métaux alcalins et/ou métaux alcalino-terreux d'au moins un produit de plante oléagineuse ;
(iii) augmentation de la stabilité vis-à-vis de l'oxydation d'au moins un produit de plante oléagineuse ;
(iv) diminution des impuretés totales d'au moins un produit de plante oléagineuse ;
(v) abaissement de l'indice d'iode d'au moins un produit de plante oléagineuse ;
(vi) abaissement de l'indice d'acide d'au moins un produit de plante oléagineuse ;
(vii) diminution de la viscosité cinématique d'au moins un produit de plante oléagineuse ;
(viii) diminution de la teneur en soufre d'au moins un produit de plante oléagineuse ;
(ix) élévation du point de flamme d'au moins un produit de plante oléagineuse ;
(xi) diminution du résidu de coke d'au moins un produit de plante oléagineuse ; et
(Xii) élévation de l'indice de cétane d'au moins un produit de plante oléagineuse ;
les produits de plantes oléagineuses étant choisis parmi l'huile obtenue à partir de colza et des produits de réaction de l'huile, les produits de réaction de l'huile consistant en les produits de transestérification de l'huile par des alcools en C₁-C₄.

2. Utilisation selon la revendication 1, en outre pour l'augmentation de la quantité de produits de plantes oléagineuses.

3. Utilisation de fongicides, qui sont choisis parmi les aryl- et hétérocyclylanilides, carbamates, dicarboximides, strobilurines, azoles et morpholines, pour la réduction de la fragilité des téguments de colza.

4. Utilisation selon l'une quelconque des revendications précédentes, dans laquelle les fongicides sont choisis parmi les aryl- et hétérocyclylanilides, azoles, strobilurines et des mélanges de ceux-ci.

5. Utilisation selon l'une quelconque des revendications précédentes, dans laquelle les aryl- et hétérocyclylanilides sont choisis parmi des composés de formule I.1 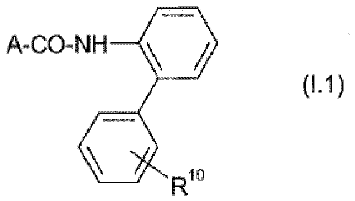 dans laquelle A représente un groupe de formule A1 à A8 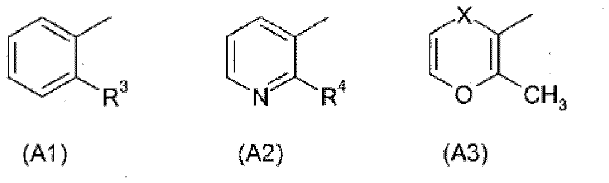 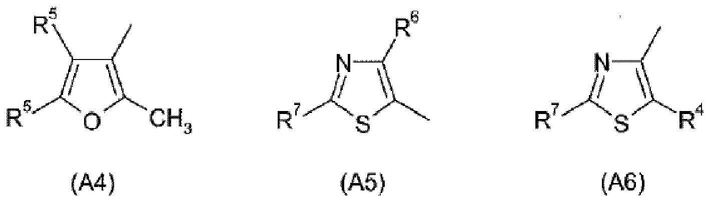 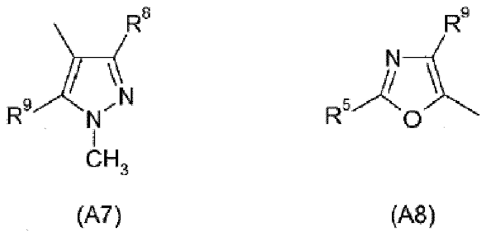 formules dans lesquelles
X représente CH₂, S, SO ou SO₂ ;
R³ représente CH₃, CHF₂, CF₃, Cl, Br ou I ;
R⁴ représente CF₃ ou Cl ;
R⁵ représente un atome d'hydrogène ou CH₃ ;
R⁶ représente CH₃, CHF₂, CF₃ ou Cl ;
R⁷ représente un atome d'hydrogène, CH₃ ou Cl ;
R⁸ représente CH₃, CHF₂ ou CF₃ ;
R⁹ représente un atome d'hydrogène, CH₃, CHF₂, CF₃ ou Cl ; et
R¹⁰ représente un groupe alkyle en C₁-C₄, alcoxy en C₁-C₄, alkyl(C₁-C₄)thio ou un atome d'halogène.

6. Utilisation selon la revendication 5, dans laquelle A représente le groupe A2, où R⁴ représente un atome d'halogène et R¹⁰ représentant un atome d'halogène.

7. Utilisation selon la revendication 6, dans laquelle l'anilide I est choisi parmi des anilides de formules I.1.1 et I.1.2

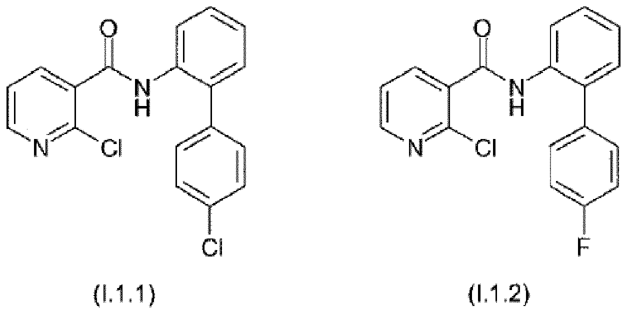

8. Utilisation selon l'une quelconque des revendications précédentes, les azoles étant choisis parmi le flusilazole, le metconazole, le prothioconazole et le tébuconazole.

9. Utilisation selon l'une quelconque des revendications précédentes, les strobilurines étant choisies parmi l'azoxystrobine, la dimoxystrobine et la pyraclostrobine.
